# EUROPEAN PATENT APPLICATION

(11) **EP 1 990 760 A1**
(43) Date of publication of application: **12.11.2008**
(21) Application number: 06714902.1
(22) Date of filing: 28.02.2006
(51) Int. Cl.: G06Q 10/00

(54) **OFFICE MANAGEMENT PROGRAM, OFFICE MANAGEMENT APPARATUS, AND OFFICE MANAGEMENT METHOD**

(71) Applicant: FUJITSU LIMITED, Kawasaki-shi, Kanagawa 211-8588 (JP)
(72) Inventor: MATSUBARA, Masazumi c/o FUJITSU LIMITED,, Kawasaki-shi, Kanagawa 211- 8588 (JP); KATSUNO, Akira c/o FUJITSU LIMITED,, Kawasaki-shi, 211- 8588 (JP)
(74) Representative: Wilding, Frances Ward
(86) International application number: PCT/JP2006/303773
(87) International publication number: WO 2007/099607

(57) **Abstract**

A technique is provided for data coordination across a multiplicity of phases.

A data receiving means (2b) receives an interface dataset (4) from the (i-1)th upstream phase. With reference to relevant representative datasets in the interface dataset (4), a phase-specific service management means (2a) performs its assigned services to produce a phase dataset. By consulting a schema (1b) corresponding to the ith phase, a representative dataset extracting means (2e) searches the phase dataset to extract a representative dataset which is minimum but sufficient for use in the subsequent phases. A relationship descriptor generating means (2f) produces relationship descriptors indicating usage relationships between this new representative dataset and the representative datasets including in the interface dataset that the data receiving means (2b) has received. A data combining means (2g) appends the representative dataset and relationship descriptors to the interface dataset (4), thus producing a modified interface dataset (5).

## Description

### Technical Field

The present invention relates to a program, apparatus, and method for managing services in multiple phases that proceed in a predetermined order. More particularly, the present invention relates to a program, apparatus, and method for managing services in a coordinated way by exchanging data between the phases.

### Background Art

Information technology (IT) systems are formed from hardware components (e.g., server, storage, network), software components, and services working thereon. For successful management of an IT system, its entire life cycle including planning, design, implementation, and operation phases has to be managed in an organized manner by enabling seamless communication between a plurality of management systems responsible for those life-cycle phases.

Generally, conventional techniques of IT system management use different methods in different phases (i.e., planning, design, implementation, and operation). For example, some phases are managed on a paper basis, while some other phases employ their own stand-alone management software tools. Even in a single phase (e.g., operation phase), two or more management methods are used together, as part of middleware programs implemented for operation management. A lack of unified management method often means a lack of unified data format, and the lack of unified data format results in poor cooperation between phases or between middleware programs used in a phase.

Some existing software products and tools permit data used in an upstream phase to be directly entered to its subsequent phase. Such a coordinated data interface makes communication easier. For example, Patent Literature 1 (see below) proposes to use the extensible markup language (XML) as a common data format for exchanging data between different systems.
Patent Literature 1: Japanese Unexamined Patent Application Publication PCT WO 2004-531006

### Disclosure of the Invention

### Problems to be solved by the Invention

The technique described in Patent Literature 1 is used only for information sharing purposes and thus provides no mechanism for managing relationships between outcomes of different systems. For this reason, the proposed technique cannot be applied to the management of data used across multiple phases. That is, the technique of Patent Literature 1 provides data coordination in limited phases, rather than an entire life cycle, from planning to operation.

As described above, conventional techniques are unable to ensure the consistency of managed data throughout the life cycle of an IT system. Suppose, for example, that a problem has arisen in an IT system in operation, necessitating redesign of the system. In such a case, the operator has to check the data of each phase, despite the fact that its structure is different from phase to phase. Those who are involved in relevant phases then have to examine the result of checking, so as to determine how the system was built from its original design data and how it has been operated.

The recent years have seen growing size and complexity of systems because of the advancement of system integration and hardware virtualization technologies. This means that conventional manual coordination of life-cycle phases is facing more and more difficulties, which results in an explosive increase of management costs. In addition, solving a problem in a large, complex system consumes much time and labor.

To address the above problems, the multiple-phase management systems have to be designed to work together, with seamless exchange of data between different phases or within a phase. It is therefore necessary to establish a new data management technique that can be applied throughout the life cycle of an IT system. Not merely supporting data sharing among a plurality of management systems, the new technique should provide a mechanism for propagating various events and operation commands from one management system to another management system, so that they can cooperate more efficiently.

In view of the foregoing, it is an object of the present invention to provide a service management program, service management apparatus, and service management method that enable data coordination across multiple phases.

### Means for Solving the Problems

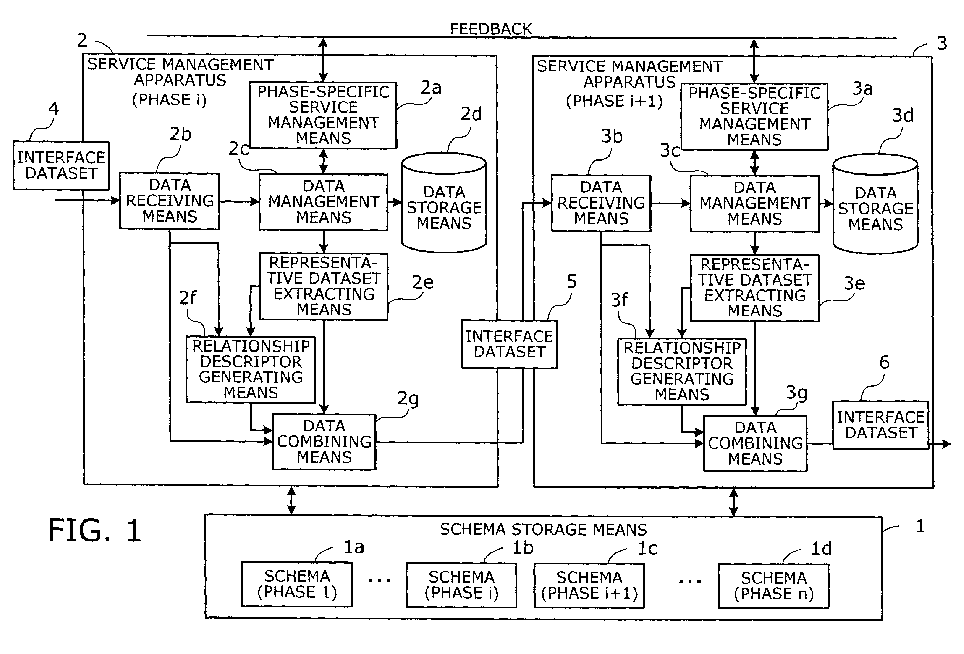

To solve the foregoing problems, the present invention provides a service management program shown in FIG. 1. According to the present invention, this service management program causes a computer to provide functions shown in FIG. 1 to manage a service in its multiple phases that proceed in a predetermined order.

A schema storage means 1 stores a schema that specifies which of data items determined in a phase should be passed as a representative dataset to subsequent phases. Phase-specific service management means 2a, 3a serve their respective assigned phases. Specifically, those phase-specific service management means 2a and 3a receive interface datasets 4 and 5 which include representative datasets and relationship descriptors of preceding phases. Using those representative datasets included in the received interface datasets 4 and 5, the phase-specific service management means 2a and 3a provide a service of their assigned phases in response to user inputs and produce a phase dataset that includes data items determined in their assigned phases. The phase dataset also includes records indicating which data was used to determine those data items. The representative dataset extracting means 2e and 3e each extract a new representative dataset from the phase dataset produced by the phase-specific service management means 2a and 3a. Specifically, this new representative dataset is a collection of extracted data items that correspond to the data items specified in a relevant schema. The relationship descriptor generating means 2f and 3f produce relationship descriptors describing usage relationships between the new representative dataset extracted by the representative dataset extracting means 2e and 3e and the representative datasets included in the interface datasets 4 and 5 used to produce the new representative dataset, with reference to the phase datasets produced by the phase-specific service management means 2a and 3a. The data combining means 2g and 3g modify the interface datasets 4 and 5 received by the phase-specific service management means 2a and 3a, by appending thereto the new representative dataset extracted by the representative dataset extracting means 2e and 3e and the relationship descriptors produced by the relationship descriptor generating means 2f and 3f. The modified interface datasets 5 and 6 are supplied to corresponding data receiving means 2b and 3b serving the next phase.

The above-described service management program, when executed on a computer, operates in the following way. The phase-specific service management means 2a and 3a, each assigned to a particular phase, receive interface datasets 4 and 5 from their respective preceding phases. Each interface dataset 4 and 5 includes representative datasets and relationship descriptors produced in the preceding phase. Using those representative datasets included in the received interface datasets 4 and 5, the phase-specific service management means 2a and 3a provide a service of their assigned phases in response to user inputs, thus producing a phase dataset formed from data items determined in their assigned phases. Each phase dataset produced by the phase-specific service management means 2a and 3 is subjected to the representative dataset extracting means 2e and 3e. The representative dataset extracting means 2e and 3e each extract a new representative dataset, i.e., a collection of data items that correspond to the data items specified in a relevant schema. Then the relationship descriptor generating means 2f and 3f produce relationship descriptors, with reference to the phase datasets produced by the phase-specific service management means 2a and 3a. The relationship descriptors describe usage relationships between the new representative dataset extracted by the representative dataset extracting means 2e and 3e and the representative datasets included in the interface datasets 4 and 5 used to produce the new representative dataset. The data combining means 2g and 3g modify the interface datasets 4 and 5 that the phase-specific service management means 2a and 3a has received, by appending thereto the new representative dataset extracted by the representative dataset extracting means 2e and 3e and the relationship descriptors produced by the relationship descriptor generating means 2f and 3f. The modified interface datasets 5 and 6 are supplied to corresponding data receiving means 2b and 3b serving the next phase.

To solve the foregoing problems, the present invention also provides an apparatus for managing services in multiple phases that proceed in a predetermined order. This apparatus comprises the following elements: schema storage means for storing a schema that specifies which of data items determined in a phase should be passed as a representative dataset to subsequent phases; phase-specific service management means, assigned to one of the phases, for receiving an interface dataset that includes representative datasets and relationship descriptors of preceding phases, and providing a service of the assigned phase in response to user inputs by using the representative datasets included in the received interface dataset to produce a phase dataset that includes data items determined in the assigned phase and records indicating which data was used to determine the data items; representative dataset extracting means for extracting a new representative dataset from the phase dataset produced by the phase-specific service management means, the new representative dataset being a collection of extracted data items that correspond to the data items specified in the schema; relationship descriptor generating means for producing relationship descriptors describing usage relationships between the new representative dataset extracted by the representative dataset extracting means and the representative datasets included in the interface dataset used to produce the new representative dataset, with reference to the phase dataset produced by the phase-specific service management means; and data combining means for modifying the interface dataset received by the phase-specific service management means, by appending thereto the new representative dataset extracted by the representative dataset extracting means and the relationship descriptors produced by the relationship descriptor generating means, and passing the modified interface dataset to the phase-specific service management means of a subsequent phase.

The above service management apparatus operates as follows. The phase-specific service management means, assigned to a particular phase, receives an interface dataset from a preceding phase. The interface dataset includes representative datasets and relationship descriptors produced in the preceding phase. Using those representative datasets included in the received interface dataset, the phase-specific service management means provides a service of the assigned phase in response to user inputs, thus producing a phase dataset formed from data items determined in the assigned phase. From the phase dataset produced by the phase-specific service management means, the representative dataset extracting means extracts a new representative dataset, i.e., a collection of data items that correspond to the data items specified in a relevant schema. Then the relationship descriptor generating means produces relationship descriptors, with reference to the phase dataset produced by the phase-specific service management means. The relationship descriptors describe usage relationships between the new representative dataset extracted by the representative dataset extracting means and the representative datasets included in the interface dataset used to produce the new representative dataset. The data combining means modifies the interface dataset that the phase-specific service management means has received, by appending thereto the new representative dataset extracted by the representative dataset extracting means and the relationship descriptors produced by the relationship descriptor generating means. The modified interface dataset is supplied to a peer data receiving means serving the next phase.

To solve the foregoing problems, the present invention further provides a method for managing services in multiple phases that proceed in a predetermined order. This method comprises the following operations: storing a schema in a schema storage means, the schema specifying which of data items determined in a phase should be passed as a representative dataset to subsequent phases; with a phase-specific service management means assigned to one of the phases, receiving an interface dataset that includes representative datasets and relationship descriptors of preceding phases, and providing a service of the assigned phase in response to user inputs by using the representative datasets included in the received interface dataset to produce a phase dataset that includes data items determined in the assigned phase and records indicating which data was used to determine the data items; with a representative dataset extracting means, extracting a new representative dataset from the phase dataset produced by the phase-specific service management means, the new representative dataset being a collection of extracted data items that correspond to the data items specified in the schema; with a relationship descriptor generating means, producing relationship descriptors describing usage relationships between the new representative dataset extracted by the representative dataset extracting means and the representative datasets included in the interface dataset used to produce the new representative dataset, with reference to the phase dataset produced by the phase-specific service management means; and with a data combining means, modifying the interface dataset received by the phase-specific service management means, by appending thereto the new representative dataset extracted by the representative dataset extracting means and the relationship descriptors produced by the relationship descriptor generating means, and passing the modified interface dataset to the phase-specific service management means of a subsequent phase.

The above service management method operates as follows. The phase-specific service management means, assigned to a particular phase, receives an interface dataset from a preceding phase. The interface dataset includes representative datasets and relationship descriptors produced in the preceding phase. Using those representative datasets included in the received interface dataset, the phase-specific service management means provides a service of the assigned phase in response to user inputs, thus producing a phase dataset formed from data items determined in the assigned phase. From the phase dataset produced by the phase-specific service management means, the representative dataset extracting means extracts a new representative dataset, i.e., a collection of data items that correspond to the data items specified in a relevant schema. Then the relationship descriptor generating means produces relationship descriptors, with reference to the phase dataset produced by the phase-specific service management means. The relationship descriptors describe usage relationships between the new representative dataset extracted by the representative dataset extracting means and the representative datasets included in the interface dataset used to produce the new representative dataset. The data combining means modifies the interface dataset that the phase-specific service management means has received, by appending thereto the new representative dataset extracted by the representative dataset extracting means and the relationship descriptors produced by the relationship descriptor generating means. The modified interface dataset is supplied to a peer data receiving means serving the next phase.

### Advantages of the Invention

According to the present invention, an interface dataset supplied to a subsequent phase includes not only a representative dataset, but also relationship descriptors indicating usage relationships between that representative dataset and data used in producing it. When a problem is found with some data item in a subsequent phase, the relationship descriptors facilitates identifying a source data item corresponding to the problematic data item.

The above and other objects, features and advantages of the present invention will become apparent from the following description when taken in conjunction with the accompanying drawings which illustrate preferred embodiments of the present invention by way of example.

### Brief Description of the Drawings

FIG. 1 gives an overview of the functions that the present embodiment provides.
FIG. 2 shows an example data structure of an interface dataset.
FIG. 3 shows an example system configuration according to a first embodiment of the present invention.
FIG. 4 shows an example hardware configuration of a server used in the present embodiment.
FIG. 5 is a functional block diagram of the first embodiment.
FIG. 6 is a flowchart showing a process of producing a schema.
FIG. 7 shows a representative dataset extracted from a database of planning phase.
FIG. 8 shows a representative dataset extracted from a database of design phase.
FIG. 9 shows a representative dataset extracted from a database of implementation phase.
FIG. 10 is a first diagram showing an example schema.
FIG. 11 is a second diagram showing an example schema.
FIG. 12 is a third diagram showing an example schema.
FIG. 13 shows a process flow of planning and design phases.
FIG. 14 shows a process flow of implementation and operation phases.
FIG. 15 shows an example of quotation data.
FIG. 16 shows an example of a planning XML document.
FIG. 17 shows an example of design data.
FIG. 18 shows an example of a design XML document.
FIG. 19 shows an example of real system data.
FIG. 20 is a first diagram showing an example of an implementation XML document.
FIG. 21 is a second diagram showing the example of an implementation XML document.
FIG. 22 shows a system configuration of a second embodiment.
FIG. 23 is a functional block diagram of the second embodiment.
FIG. 24 shows an example of server device management data.
FIG. 25 shows an example of storage device management data.
FIG. 26 shows an example of network device management data.
FIG. 27 shows an example of a server management XML document.
FIG. 28 shows an example of a storage management XML document.
FIG. 29 shows an example of a network management XML document.
FIG. 30 is a first diagram showing an example of a resource management XML document.
FIG. 31 is a second diagram showing the example of a resource management XML document.
FIG. 32 is a third diagram showing the example of a resource management XML document.
FIG. 33 is a flowchart showing how a feedback from operation phase is handled.

Best Mode for Carrying Out the Invention Preferred embodiments of the present invention will be described below with reference to the accompanying drawings.

FIG. 1 gives an overview of the functions that the present embodiment provides. As can be seen from FIG. 1, the present embodiment is formed from a schema storage means 1 and a plurality of service management apparatuses 2 and 3. This example assumes that a service is provided through n phases, where n is a natural number. More specifically, the life cycle of a service begins with phase 1 and proceeds to phase 2, phase 3, ..., phase i, phase i+1, ..., and phase n, where i is a natural number greater than one and smaller than n. FIG. 1 shows only a part of service management apparatuses used in such a service life cycle. That is, one service management apparatus 2 manages the service in the ith phase, while another service management apparatus 3 manages the same in the (i+1)th phase.

The schema storage means 1 stores a schema that specifies which of the data items determined in a phase should be passed to subsequent phases as a representative dataset. Specifically, FIG. 1 illustrates a plurality of schemas 1a, 1b, 1c, and 1d corresponding to different phases.

The service management apparatus 2 includes a phase-specific service management means 2a, a data receiving means 2b, a data management means 2c, a data storage means 2d, a representative dataset extracting means 2e, a relationship descriptor generating means 2f, and a data combining means 2g. Likewise, the service management apparatus 3 includes a phase-specific service management means 3a, a data receiving means 3b, a data management means 3c, a data storage means 3d, a representative dataset extracting means 3e, a relationship descriptor generating means 3f, and a data combining means 3g.

The phase-specific service management means 2a and 3a receive interface datasets 4 and 5 which include representative datasets and relationship descriptors of preceding phases. Using those representative datasets included in the received interface datasets 4 and 5, the phase-specific service management means 2a and 3a provide a service of their assigned phases in response to user inputs and produce a phase dataset that includes data items determined in their assigned phases. The phase dataset also includes records indicating which data was used to determine those data items.

The data receiving means 2b and 3b receive interface datasets 4 and 5 from other service management apparatuses serving the preceding phases. The received interface datasets 4 and 5 are sent to data storage means 2d and 3d via data management means 2c and 3c, respectively.

The data storage means 2d and 3d are where the phase datasets and interface datasets 4 and 5 are stored.

The data management means 2c and 3c save the phase datasets created by the phase-specific service management means 2a and 3a in the data storage means 2d and 3d, together with the interface datasets 4 and 5 received by the data receiving means 2b and 3b. The data management means 2c and 3c supply those stored interface datasets 4 and 5 in the data storage means 2d and 3d to the phase-specific service management means 2a and 3a, respectively, in response to their request. The data management means 2c and 3c also supply phase datasets created by the phase-specific service management means 2a and 3a to the representative dataset extracting means 2e and 3e, respectively.

The representative dataset extracting means 2e and 3e each extract a new representative dataset from the phase dataset produced by the phase-specific service management means 2a and 3a. This new representative dataset is a collection of extracted data items that correspond to the data items specified in a relevant schema.

The relationship descriptor generating means 2f and 3f produce relationship descriptors describing usage relationships between the new representative dataset extracted by the representative dataset extracting means 2e and 3e and the representative datasets included in the interface datasets 4 and 5 received by the data receiving means 2b and 3b, with reference to the phase datasets produced by the phase-specific service management means 2a and 3a.

The data combining means 2g and 3g modify the interface datasets 4 and 5 received by the data receiving means 2b and 3b, by appending thereto the new representative dataset extracted by the representative dataset extracting means 2e and 3e and the relationship descriptors produced by the relationship descriptor generating means 2f and 3f. The modified interface datasets 5 and 6 are supplied to corresponding data receiving means 2b and 3b serving the next phase.

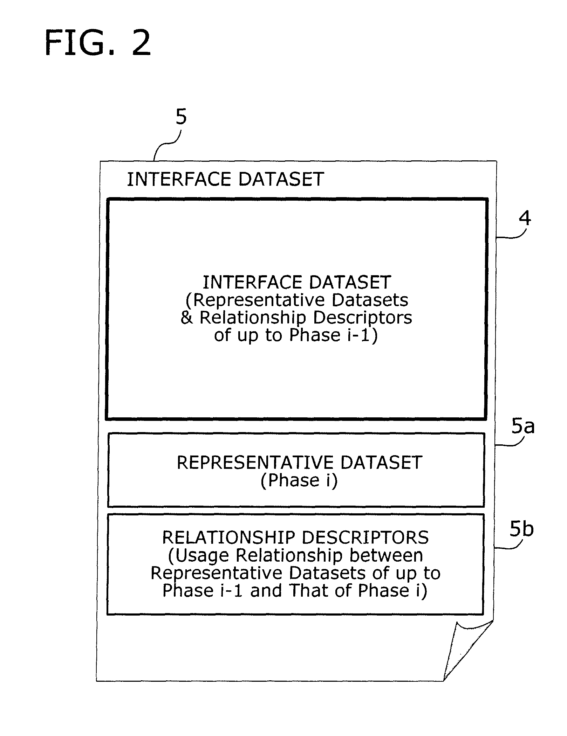

FIG. 2 shows an example data structure of an interface dataset 5 produced in the ith phase. This interface dataset 5 contains an interface dataset 4, which is a collection of representative datasets and relationship descriptors up to the (i-1)th phase. Also contained are a representative dataset 5a in the ith phase and relationship descriptors 5b describing usage relationships between representative datasets of up to the (i-1)th phase and that of the ith phase.

The system shown in FIG. 1 manages services in the following way.

The service management apparatus 2 first receives an interface dataset 4 from its upstream phase, or the (i-1)th phase. Specifically, this interface dataset 4 is received by the data receiving means 2b and saved in the data storage means 2d via the data management means 2c. With reference to relevant representative datasets in the interface dataset 4, the phase-specific service management means 2a performs its assigned services, thus producing a phase dataset. The data management means 2c supplies this phase dataset to the representative dataset extracting means 2e, besides saving it in the data storage means 2d.

With reference to a schema 1b corresponding to the ith phase, the representative dataset extracting means 2e searches the phase dataset to extract therefrom a minimum sufficient set of data items for use in subsequent phases. The resulting representative dataset may include a whole or part of the phase dataset.

The relationship descriptor generating means 2f, on the other hand, receives the representative dataset of the assigned phase from the representative dataset extracting means 2e, as well as the interface dataset 4 from the data receiving means 2b. With reference to the phase dataset produced by the phase-specific service management means 2a, the relationship descriptor generating means 2f produces relationship descriptors.

The data combining means 2g receives the interface dataset 4 from the data receiving means 2b, as well as the representative dataset of the assigned phase from the representative dataset extracting means 2e. It also receives the produced relationship descriptors from the relationship descriptor generating means 2f. The data combining means 2g appends the received representative dataset and relationship descriptors to the interface dataset 4, thus producing a new interface dataset 5. The data combining means 2g sends this interface dataset 5 to the data receiving means 3b in the next phase.

In the service management apparatus 3 serving in the (i+1)th phase, the data receiving means 3b receives the new interface dataset 5 and passes it to the data management means 3c. The data management means 3c forwards the received dataset to the phase-specific service management means 3a, besides saving it in the data storage means 3d.

Using relevant representative datasets contained in the interface dataset 5, the phase-specific service management means 3a provides services of its assigned phase. A problem may arise during this course due to some wrong part of the representative dataset of a preceding phase. If this is the case, the phase-specific service management means 3a notifies the responsible phase-specific service management means of details of the problem by sending a problem report. If, on the other hand, the phase-specific service management means 3a encounters no problems, the service management apparatus 3 produces an interface dataset 6 in the same way as the preceding service management apparatus 2 has done. The resulting interface dataset 6 is sent to another subsequent service management apparatus serving in the next phase.

As can be seen from the above, the proposed structure of service management apparatuses is applicable to every phase of the life cycle of an IT system. A service management apparatus may encounter a situation where it needs some detailed information that is not available in the received interface dataset. Such information may only be available in a preceding phase. Relationship descriptors contained in the received interface dataset helps the service management apparatus to identify which part of representative dataset was produced in which phase. The service management apparatus then asks its peer service management apparatus serving a relevant phase about the identified representative dataset, thereby obtaining detailed information.

Suppose, for example, that a service management apparatus needs location information of a particular device that is failed or in some unusual situation. In this case, the service management apparatus finds the ID of the failed device in a received interface dataset. The service management apparatus then sends an inquiry to a peer service management apparatus by using the device ID as a search key, in an attempt to obtain detailed information about the device in question. The service management apparatus may also send a data update request to the peer service management apparatus in a previous phase, based on some information in the received representative dataset or based on the detailed information obtained through an inquiry.

The system shown in FIG. 1 has multiple schemas prepared for a plurality of phases for the purpose of their communication. As an alternative configuration, the system may use a unified schema throughout the phases.

In the former case, each phase-specific schema defines what data is necessary and sufficient for the communication between two management systems serving different phases. While some data items of preceding phases may not be used in the current phase, the current phase has to include such data items in its interface dataset if they will be used in a later phase. The schemas are supposed to make this possible.

In the latter case, on the other hand, the contents and structure of a unified schema encompasses representative datasets and their corresponding relationship descriptors for all phases.

The system of FIG. 1 requires data receiving means 2b and 3b since it employs separate service management apparatuses 2 and 3 for individual phases. In the case where a single service management apparatus serves two or more consecutive phases, this service management apparatus does not need to have data receiving means corresponding to the second and subsequent phases.

Instead of having a data receiving means, the service management apparatus is configured to make its data combining means deliver an interface dataset of one phase directly to a data management means and other means of the next phase.

The system of FIG. 1 has a schema storage means 1 as an independent subsystem separate from service management apparatuses. As an alternative to this configuration, each service management apparatus may have its own schema storage functions. In the case of phase-specific schemas, each service management apparatus stores two schemas for the purpose of communication with neighboring service management apparatuses. More specifically, the ith service management apparatus stores schemas for the (i-1)th and ith phases. In the case of a unified schema, the schema management means of every resource management system stores an exactly identical schema.

The service management apparatuses exchange their data by using a common data format. In recent years, XML has been of particular interest as a meta language for exchanging and/or storing data as in the present embodiment. Besides being highly expandable, XML ensures full interoperability between systems because it does not depend on any particular platforms or languages. Since XML enables expression of structured data in text form, both human and machine can handle XML documents without difficulties. XML also permits the user to determine whether the contents of an XML document are organized correctly, by using an XML schema that defines elements of a document and their structure. Accordingly, the following embodiments will use XML as the format of interface datasets, together with XML schemas under the management of a schema management system.

### First Embodiment

The following will describe in detail a first embodiment of the present invention.

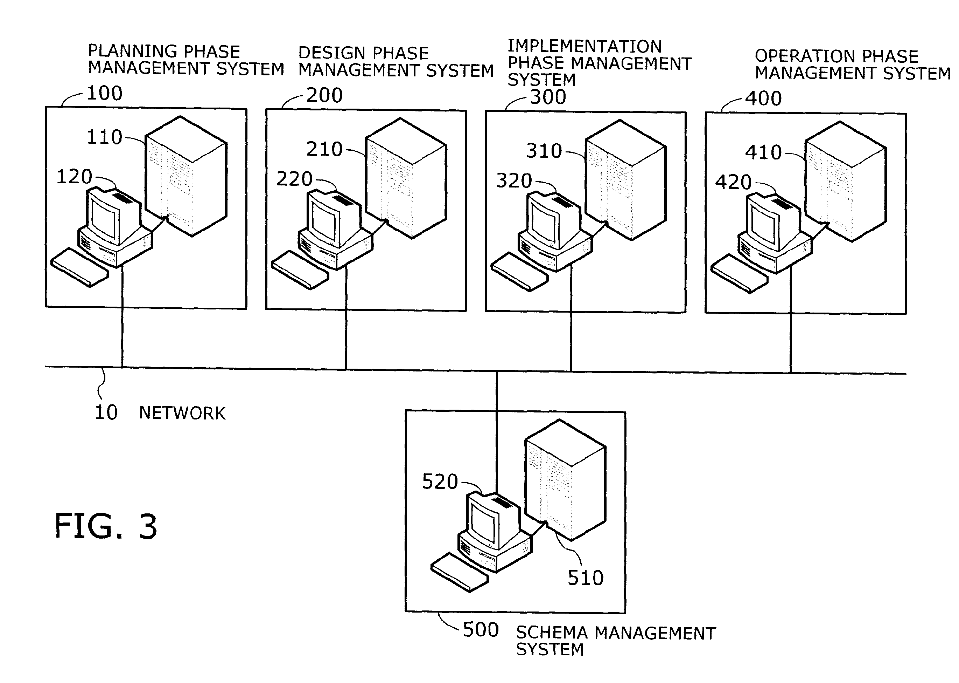

FIG. 3 shows an example system configuration according to the first embodiment of the present invention. This embodiment is directed to a project of IT system development including planning phase, design phase, implementation phase, and operation phase. Specifically, in the example of FIG. 3, a network 10 interconnects a planning phase management system 100, a design phase management system 200, an implementation phase management system 300, an operation phase management system 400, and a schema management system 500.

The planning phase management system 100 is a computer system used when a vendor have a business talk with its customer to formulate a plan. The planning phase management system 100 is formed from a storage device 110 and a server 120. The storage device 110 stores data showing planning results.

The design phase management system 200 is a computer system used to design a system according to planning results to satisfy the customer's desire. The design phase management system 200 is formed from a storage device 210 and a server 220. The storage device 210 stores data showing design results.

The implementation phase management system 300 is a computer system used to connect required devices and install software components according to the design results to set up the system. The implementation phase management system 300 is formed from a storage device 310 and a server 320. The storage device 310 stores data showing implementation results.

The operation phase management system 400 is a computer system used to manage the operation of the implemented system. The operation phase management system 400 is formed from a storage device 410 and a server 420. The storage device 410 stores data showing the operating status.

The schema management system 500 is a computer system that manages schemas. The schema management system 500 is formed from a storage device 510 and a server 520. The storage device 510 stores a schema of each phase, which describes what kinds of output data should be passed to the next phase and in what structure they should be arranged.

The present system assumes that the life cycle of an IT system is divided into four phases (i.e., planning, design, implementation, and operations), and that a resource management system is provided for each of those four phases. It should be noted, however, that the present invention is not limited to this assumption. Rather, a life cycle may be divided into more than four phases or less than four phases.

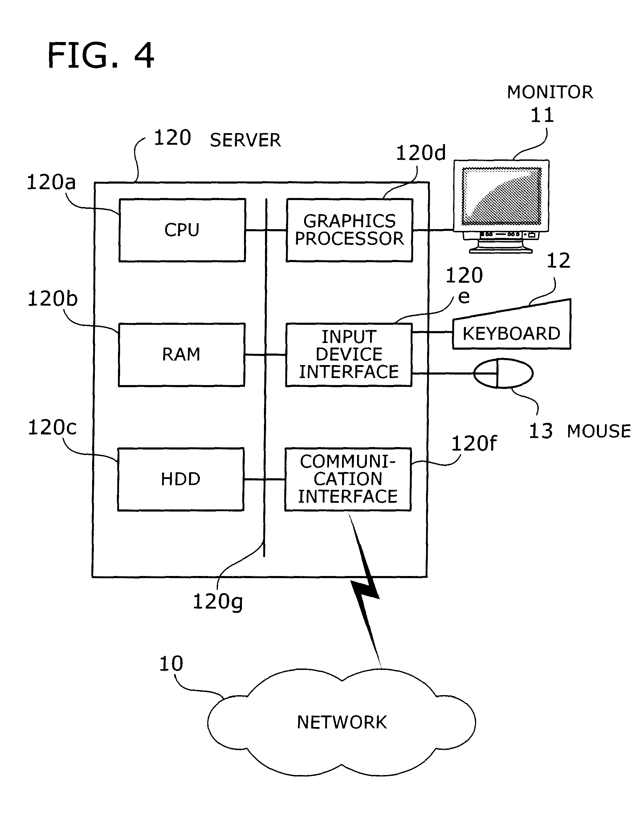

FIG. 4 shows an example hardware configuration of a server used in the present embodiment. The illustrated server 120 is totally controlled by a central processing unit (CPU) 120a. Coupled to this CPU 120a via a bus 120g are: a random access memory (RAM) 120b, a hard disk drive (HDD) 120c, a graphics processor 120d, an input device interface 120e, and a communication interface 120f.

The RAM 120b serves as temporary storage for the whole or part of operating system (OS) programs and application programs that the CPU 120a executes, in addition to other various data objects manipulated at runtime. The HDD 120c stores operating system programs and various application programs.

The graphics processor 120d is coupled to a monitor 11. The graphics processor 120d produces video images in accordance with commands from the CPU 120a and displays them on a screen of the monitor 11. Coupled to the input device interface 120e are a keyboard 12 and a mouse 13. The input device interface 120e receives signals from the keyboard 12 and mouse 13 and supplies them to the CPU 120a via the bus 120g.

The communication interface 120f is connected to a network 10, allowing the CPU 120a to exchange data with other computers via the network 10.

The hardware platform described above is used to realize the processing functions of the present embodiment. While FIG. 4 shows an example hardware configuration of the server 120 in the planning phase management system 100, the illustrated hardware design may be applied to other servers 220, 320, 420, and 520.

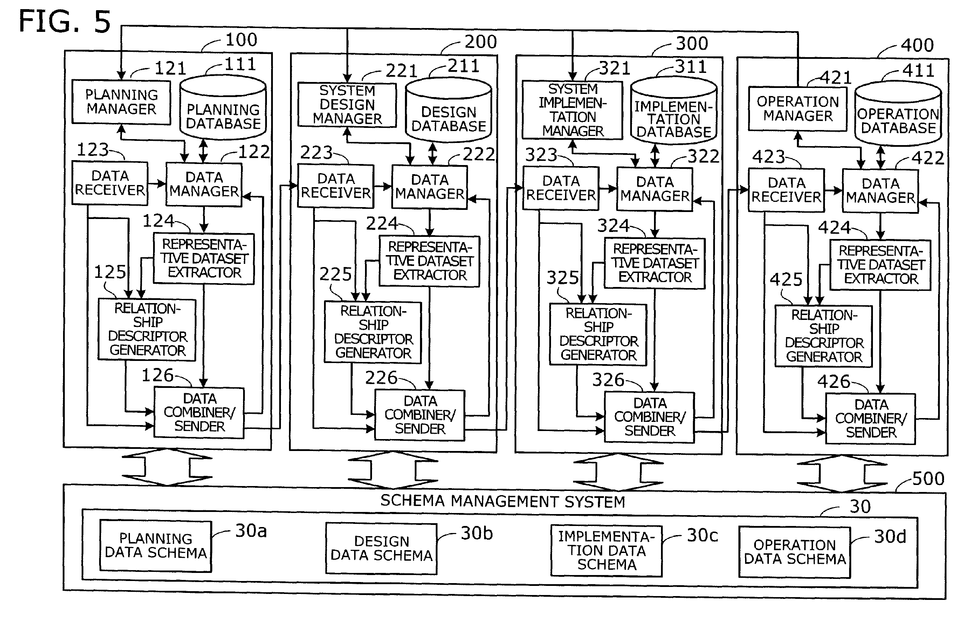

FIG. 5 is a functional block diagram of the first embodiment. The illustrated planning phase management system 100 includes a planning database 111, a planning manager 121, a data manager 122, a data receiver 123, a representative dataset extractor 124, a relationship descriptor generator 125, and a data combiner/sender 126.

The planning database 111, constructed in the storage device 110, stores data describing results of planning, together with data used during that process.

The planning manager 121 offers data processing functions to aid sales staff to discuss business with their customers, which include the function of preparing quotations for customers. During a planning process, the planning manager 121 makes access to relevant records of the planning database 111 via the data manager 122, as well as saving planning results and other related information in the planning database 111.

The data manager 122 sends and receives data to/from the planning database 111. For example, when a planning XML document (i.e., data describing planning results) is received from the planning manager 121, the data manager 122 saves that data in the planning database 111.

The data receiver 123 receives an interface dataset from an upstream phase. The received interface dataset is passed to the relationship descriptor generator 125 and data combiner/sender 126, besides being entered to the planning database 111 via the data manager 122. The data receiver 123 also validates the received interface dataset by comparing it with a predefined schema 30. If required, the data receiver 123 converts its data format so that other elements of the planning phase management system 100 can handle it easily in the present phase. In the example of FIG. 5, planning phase is the first phase in a stream of services. Accordingly there is no incoming interface dataset for the data receiver 123 of the planning phase management system 100.

The representative dataset extractor 124 searches the planning database 111 to extract data that will be required in subsequent phases. The extracted data is passed to the relationship descriptor generator 125 and data combiner/sender 126. A planning data schema 30a in the schema management system 500 is used in this operation to determine which data to extract.

The relationship descriptor generator 125 produces relationship descriptors indicating how the upstream-phase dataset received by the data receiver 123 is related to the dataset supplied from the representative dataset extractor 124. The produced relationship descriptors are supplied to the data combiner/sender 126.

The data combiner/sender 126 combines the upstream-phase dataset supplied from the data receiver 123, representative dataset supplied from the representative dataset extractor 124, and relationship descriptors supplied from the relationship descriptor generator 125, thereby producing a new interface dataset. The data combiner/sender 126 sends this new interface dataset to the design phase management system 200. The data combiner/sender 126 also saves the produced interface dataset in the planning database 111 via the data manager 122.

The design phase management system 200 includes a design database 211, a system design manager 221, a data manager 222, a data receiver 223, a representative dataset extractor 224, a relationship descriptor generator 225, and a data combiner/sender 226.

The design database 211 is a database constructed in the storage device 210. The design database 221 stores data describing results of design, together with data used during that process.

The system design manager 221 offers data processing functions for supporting a process of designing a system based on planning results. During design, the system design manager 221 makes access to relevant records of the design database 211 via the data manager 222, as well as saving the resulting design data and other related information in the design database 211.

The data manager 222, data receiver 223, representative dataset extractor 224, relationship descriptor generator 225, and data combiner/sender 226 in the design phase management system 200 have basically the same functions as their respective counterparts in the planning phase management system 100, except for some points noted below.

Specifically, their differences are as follows. The data receiver 223 receives an interface dataset supplied from the data combiner/sender 126 in the planning phase management system 100. The representative dataset extractor 224 consults a design data schema 30b when extracting a representative dataset. The data combiner/sender 226 sends a produced interface dataset to the implementation phase management system 300.

The implementation phase management system 300 includes an implementation database 311, a system implementation manager 321, a data manager 322, a data receiver 323, a representative dataset extractor 324, a relationship descriptor generator 325, and a data combiner/sender 326.

The implementation database 321 is a database constructed in the storage device 310. The implementation database 321 stores data describing results of system implementation, together with data used during that process.

The system implementation manager 321 offers data processing functions for supporting a process of implementing a system based on design results. During this process, the system implementation manager 321 makes access to relevant records of the implementation database 311 via the data manager 322, as well as saving the results of system implementation and other related information in the implementation database 311.

The data manager 322, data receiver 323, representative dataset extractor 324, relationship descriptor generator 325, and data combiner/sender 326 in the implementation phase management system 300 have basically the same functions as their respective counterparts in the planning phase management system 100, except for some points described below.

Specifically, their differences are as follows. The data receiver 323 receives an interface dataset from the data combiner/sender 226 in the design phase management system 200. The representative dataset extractor 324 consults an implementation data schema 30c when extracting a representative dataset. The data combiner/sender 326 sends a produced interface dataset to the operation phase management system 400.

The operation phase management system 400 includes an operation database 411, an operation manager 421, a data manager 422, a data receiver 423, a representative dataset extractor 424, a relationship descriptor generator 425, and a data combiner/sender 426.

The operation database 421 is a database operated in the storage device 410. The operation database 421 stores data describing results of system operation, together with data used during that process.

The operation manager 421 offers data processing functions for supporting system operations based on the design results. During this process, the operation manager 421 makes access to relevant records of the operation database 411 via the data manager 422, as well as saving the results of system operation and other related information in the operation database 411.

The data manager 422, data receiver 423, representative dataset extractor 424, relationship descriptor generator 425, and data combiner/sender 426 in the operation phase management system 400 have basically the same functions as their respective counterparts in the planning phase management system 100, except for some points described below.

Specifically, their differences are as follows. The data receiver 423 receives an interface dataset from the data combiner/sender 326 in the implementation phase management system 300. The representative dataset extractor 424 consults an operation data schema 30d when extracting a representative dataset. The data combiner/sender 426 produces an interface dataset, but has no particular destinations for that dataset.

The schema management system 500 manages schemas of individual phases. In the example of FIG. 5, the illustrated schema management system 500 manages a planning data schema 30a, a design data schema 30b, an implementation data schema 30c, and an operation data schema 30d. More specifically, those schemas 30a to 30d are stored in a storage device 510 as part of the schema management system 500. FIG. 5 shows multiple phase-specific schemas to illustrate correspondence between management systems and schemas. However, the present embodiment assumes that a unified schema 30 is used throughout the life cycle.

The above-described system provides coordination between different phases, thus enabling consistent data management in an IT system from its introduction stage to operation and management stage. It is now assumed that the structure of data managed in each phase's database (i.e., planning database 111, design database 211, implementation database 311, operation database 411), including naming and hierarchical arrangement of data items, is defined before the system of FIG. 5 is put into operation. The user prepares a schema by referring to such data structure of each database.

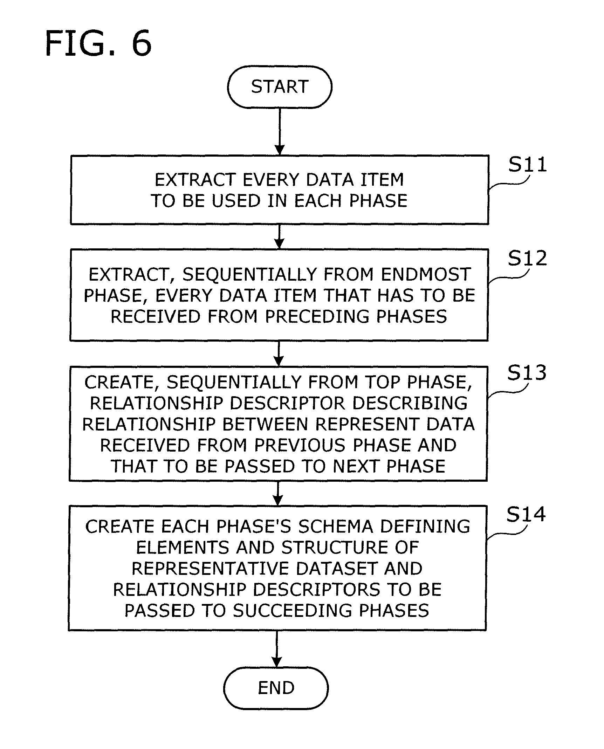

FIG. 6 is a flowchart showing a process of producing a schema. The process proceeds according to the following steps:
(Step S11) The user extracts every data item required for operation and management of each phase by using a server 520 in the schema management system 500. Specifically, the user makes access to each phase-specific database (planning database 111, design database 211, implementation database 311, operation database 411) via the server 520 to extract data items defined there. This step extracts not only new data items entered or produced in the present phase, but also those inherited from preceding phases.
(Step S12) The user connecting to the server 520 browses the data extracted at step S11 on a monitor screen. Scanning the data back from the endmost phase, the user extracts all data items that one phase is supposed to receive from its preceding phases. Those data items constitute a representative dataset.

More specifically, the user checks each data item of the operation database 411 to determine whether it has to be received as a representative dataset from implementation phase, which is preceding the present operation phase. The user then selects such requisite data items on a monitor screen of the server 520. After that, the user extracts the same from the implementation database 311 and then from the design database 211. There is no need to extract such data from the planning database 111 since planning phase is the topmost phase.

The processing at step S12 makes it clear which part of the data produced in each phase is required by succeeding phases. When a data item is extracted at this step, that item is entered to the representative dataset of its originating phase.

(Step S13) The user connecting to the server 520 identifies data items for creating relationship descriptors that indicate how a representative dataset to be passed from one phase to another phase is related with those of the preceding phases. This task starts with the topmost phase and proceeds to subsequent phases.

A relationship descriptor is actually a link from a data item of interest to another data item consulted as a reference, or used as a basis, in producing the data item of interest. When a problem is found in a subsequent phase, or when the user needs to refer back to some detailed information, those links lead him/her to every related data item.

The above representative dataset and relationship descriptors is supposed to be sent to a subsequent phase through a data transmission means (described later). At this point, however, there is no determined data format for sending such data. Accordingly the next step S14 is executed.

(Step S14) The user connecting to the server 520 creates a schema that defines elements and structure of an interface dataset for sending a representative dataset and relationship descriptors of each phase. According to the present embodiment, the XML format is used for this purpose. The user prepares as many schemas as the number of phases and registers them with a storage device 510 in the schema management system 500.

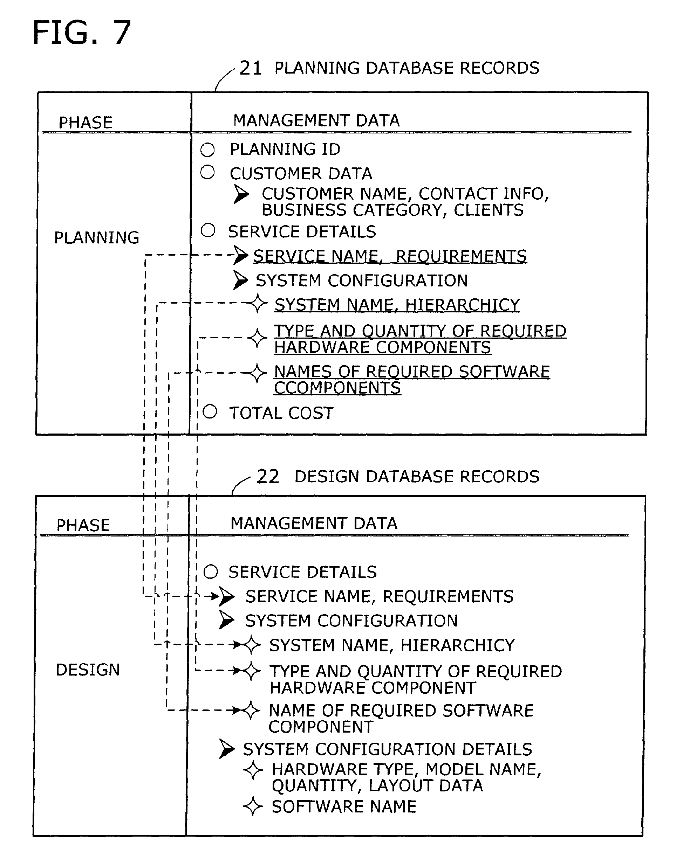

The following section will describe more specifically how schemas are created through the above-described steps. Referring first to FIGS. 7 to 9, several examples of representative datasets extracted from each phase's database are shown.

FIG. 7 shows a representative dataset extracted from a database of planning phase. Specifically, the upper half of FIG. 7 shows planning database records 21, while the lower half gives design database records 22.

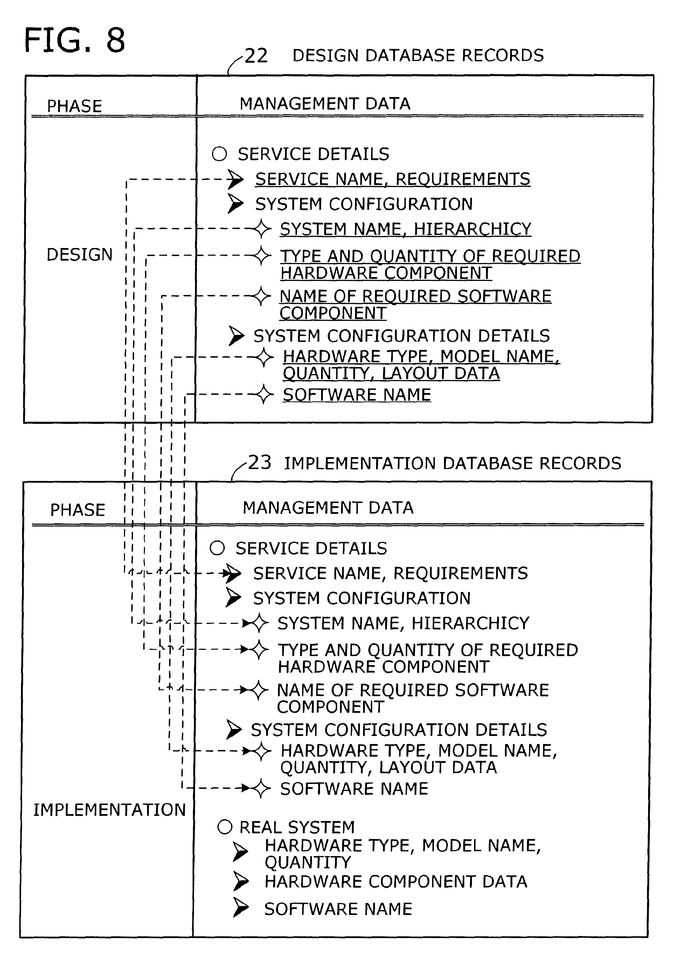

FIG. 8 shows a representative dataset extracted from a database of design phase. Specifically, the upper half of FIG. 8 shows design database records 22, while the lower half shows implementation database records 23.

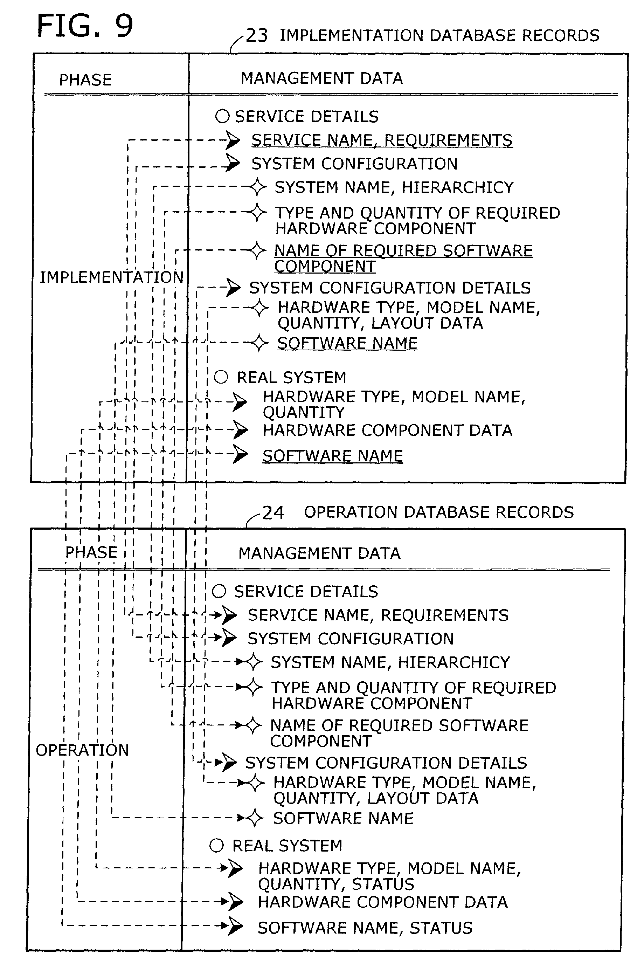

FIG. 9 shows a representative dataset extracted from a database of implementation phase. Specifically, the upper half of FIG. 9 shows implementation database records 23, while the lower half shows operation database records 24.

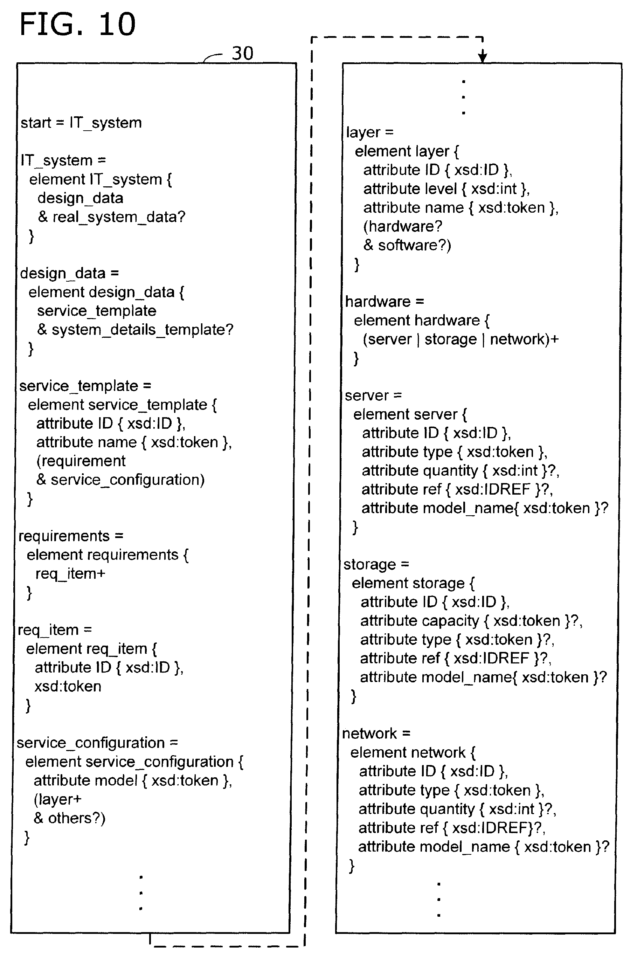

In FIGS. 7 to 9, the underline indicates data items inherited from one phase to another phase. In addition, the broken line indicates inheritance relationships between data items (representative dataset) of different phases. An example schema created from those pieces of information is shown in FIGS. 10 to 12. Relax NG Compact Syntax is used to write this schema. Being a unified schema shared by all phases, this schema makes it possible to validate every XML document produced in each phase.

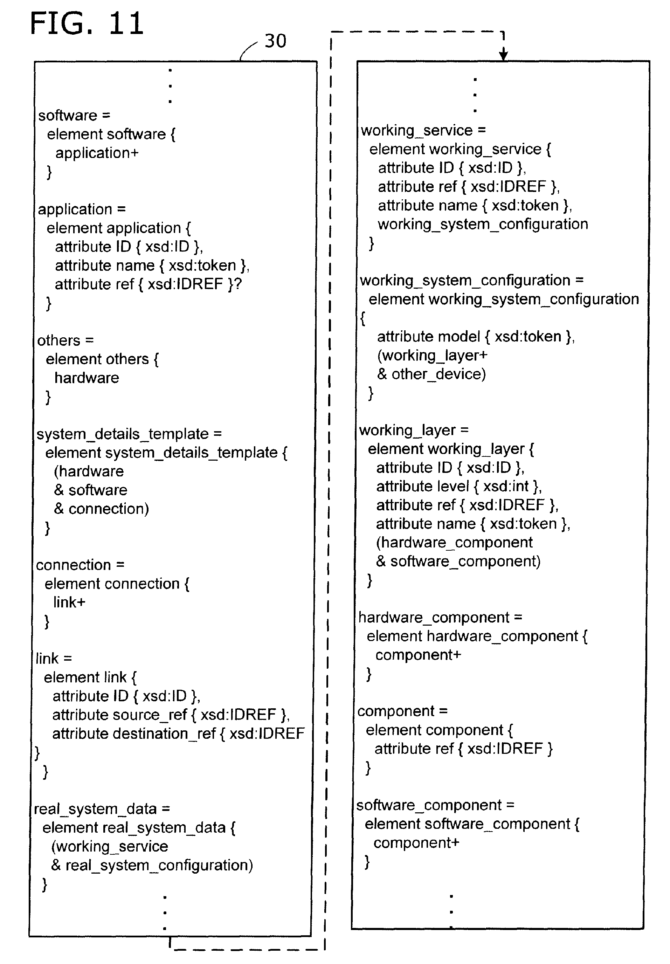

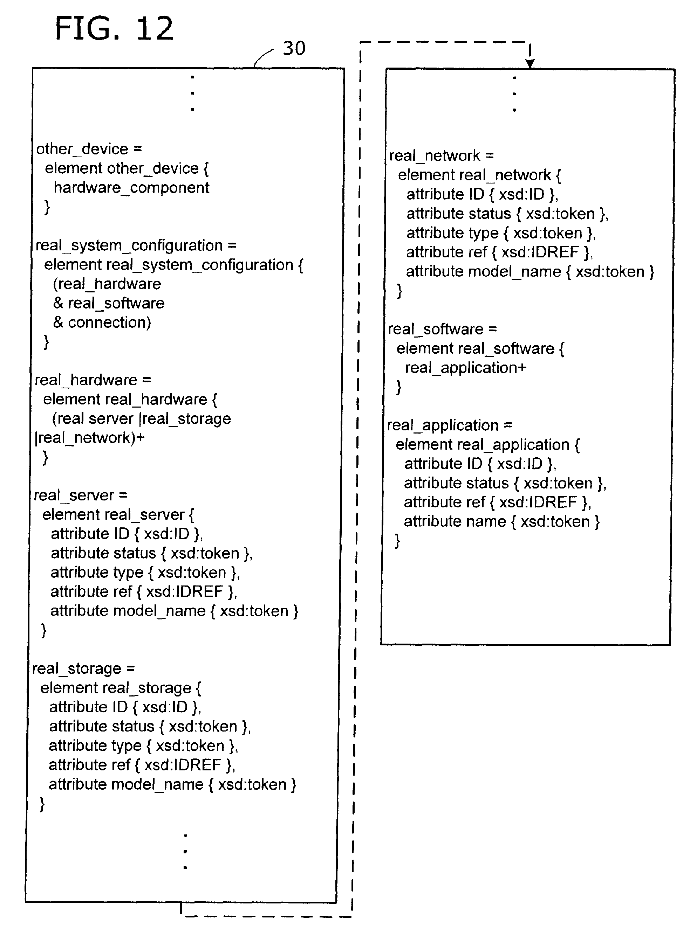

FIGS. 10 to 12 are first to third diagrams showing an example schema. This schema 30 begins in FIG. 10 and proceeds to FIG. 11 and FIG. 12.

Each element of the schema 30 has a line that reads "attribute ID { xsd:ID }" to define an identifier (ID) for a data item of a representative dataset. Some elements have a line that reads "attribute ref { xsd:IDREF }" to designate a reference to another data element by its ID. This "ref" attribute corresponds to what has been described as a relation descriptor.

The above-described schema 30 is stored in a storage device 510 of the schema management system 500.

The following section will describe how the system of FIG. 5 operates in each of the planning, design, implementation, and operation phases.

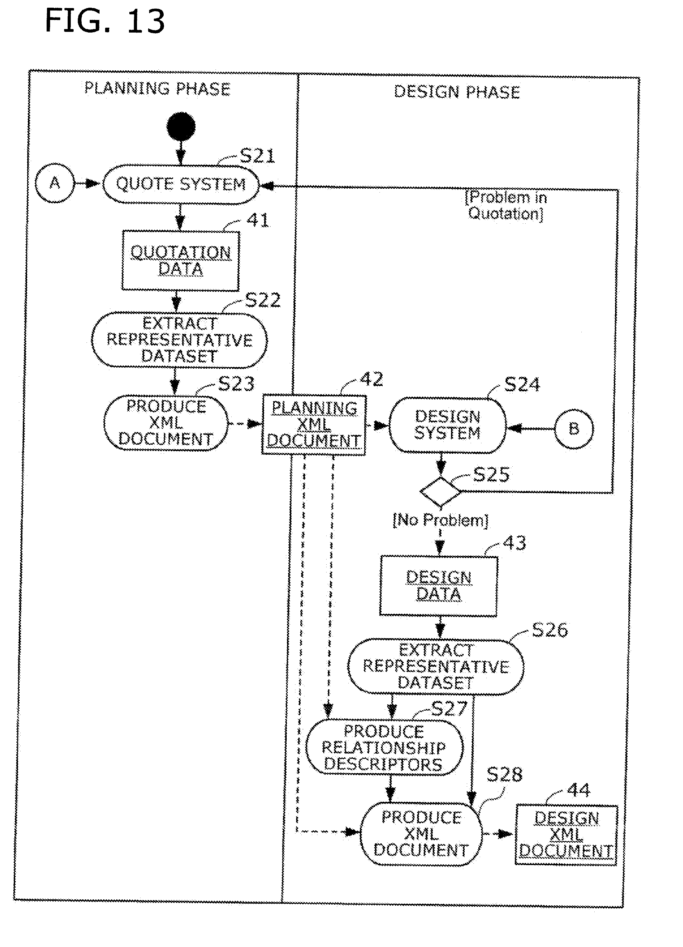

FIG. 13 shows a process flow of planning and design phases. This process proceeds according to the following steps:
(Step S21) The user (e.g., a sales engineer who discusses with their customers in this case) prepares quotations for a system under planning by using a planning manager 121 of the planning phase management system 100. Step S21 is executed on the server 120 of the planning phase management system 100 upon receipt of necessary information from the user. Specifically, the planning manager 121 receives user inputs specifying the customer's desired system throughput and features, and determines an optimal solution for that system specification. This quotation processing yields quotation data 41.
(Step S22) The representative dataset extractor 124 extracts a representative dataset from the quotation data 41. The schema 30 is used to check each data item in the quotation data 41 to determine whether to include it as part of a representative dataset. That is, the representative dataset extractor 124 extracts data items of the quotation data if they are specified in the schema 30.
(Step S23) The data combiner/sender 126 produces an XML document from the representative dataset that the representative dataset extractor 124 has extracted. The resulting document is referred to as a planning XML document 42, which is then passed to the data receiver 223 in the design phase management system 200.
(Step S24) In the design phase management system 200, its system design manager 221 supports designing network configuration and other details of the system according to the planning XML document 42 produced in planning phase.
(Step S25) If there is a problem in the quotation data, the system design manager 221 feeds it back to the planning manager 121, together with relevant part of the received planning XML document 42 as a key. If the quotation data has no problem, the system design manager 221 produces design data 43 describing details. This design data 43 is passed to the data manager 222 for registration in the design database 211.
(Step S26) Consulting the schema 30, the representative dataset extractor 224 extracts a representative dataset from the design data 43.
(Step S27) The data combiner/sender 226 produces relationship descriptors by comparing the design-phase representative dataset extracted by the representative dataset extractor 224 with an interface dataset supplied from the data receiver 223.
(Step S28) The data combiner/sender 226 appends the produced representative dataset and relationship descriptors of design phase to the interface dataset from the data receiver 223, thereby producing a design XML document 44. The produced design XML document 44 is then passed to the data receiver 323 in the implementation phase management system 300.

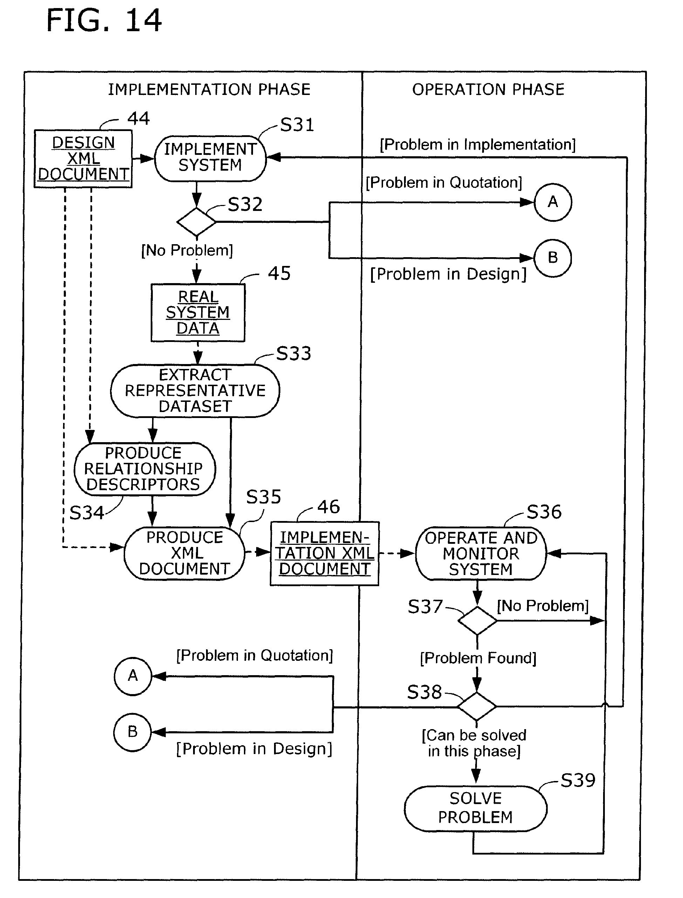

FIG. 14 shows a process flow of implementation and operation phases. This process proceeds according to the following steps:
(Step S31) The system implementation manager 321 in the implementation phase management system 300 constructs an actual system according to the design XML document 44 produced in design phase.
(Step S32) If there is a problem in the quotation data, the system implementation manager 321 feeds it back to the planning manager 121, together with relevant part of the received design XML document 44 as a key. If there is a problem in design data (e.g., device connection), the system implementation manager 321 feeds it back to the system design manager 221, together with relevant part of the received design XML document 44 as a key. For example, the system implementation manager 321 notifies the system design manager 221 of which part of the connection is incorrect, allowing the system design manager 221 to redesign the system.

If the quotation data and design data have no problem, the system implementation manager 321 implements the system based on what is described in the design XML document 44. The resulting real system data 45 is passed to the data manager 322 for registration in the implementation database 311.

(Step S33) Consulting the schema 30, the representative dataset extractor 324 extracts a representative dataset from the real system data 45.

(Step S34) The data combiner/sender 326 produces relationship descriptors by comparing the implementation-phase representative dataset extracted by the representative dataset extractor 324 with the design XML document received from the data receiver 323.

(Step S35) The data combiner/sender 326 appends the produced represent dataset and relationship descriptors of implementation phase to the design XML document 44 supplied from the data receiver 323, thereby producing an implementation XML document 46. This implementation XML document 46 is passed to the data receiver 423 of the operation phase management system 400.

(Step S36) In operation phase, which is the last of four phases, the operation manager 421 in the operation phase management system 400 operates and monitors the system by using the implementation XML document 46 produced in implementation phase.

(Step S37) The operation manager 421 continues to operate the system as long as there are no problems.

(Step S38) When the system exhibits a problem during operation, the operation manager 421 determines whether the problem can be solved within the present phase. If so, the operation manager 421 advances to step S39. If not, the operation manager 421 goes back to an appropriate phase to solve the problem.

(Step S39) The system is restarted after the problem is solved.

The following section will present a more specific example of the above-described process flow of FIGS. 13 and 14.

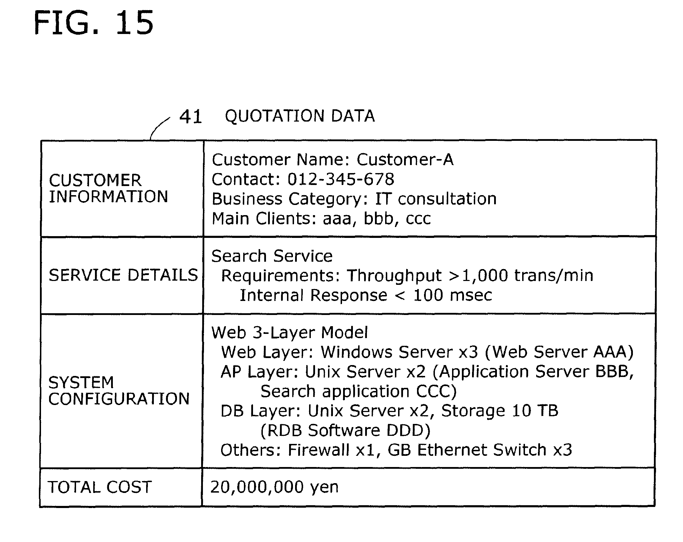

FIG. 15 shows an example of quotation data. This quotation data 41 includes customer information and total cost of the system, besides describing service details, system configuration. Every item of the quotation data 41 is stored in the planning database 111 under the control of the data manager 122. The subsequent phases, however, do not need all those data items; some items must rather be hidden from outside view for privacy or security reasons. Accordingly, the representative dataset extractor 124 selectively extracts a collection of data items required by subsequent phases as a representative dataset, the result of which is used by the data combiner/sender 126 to produce a planning XML document 42.

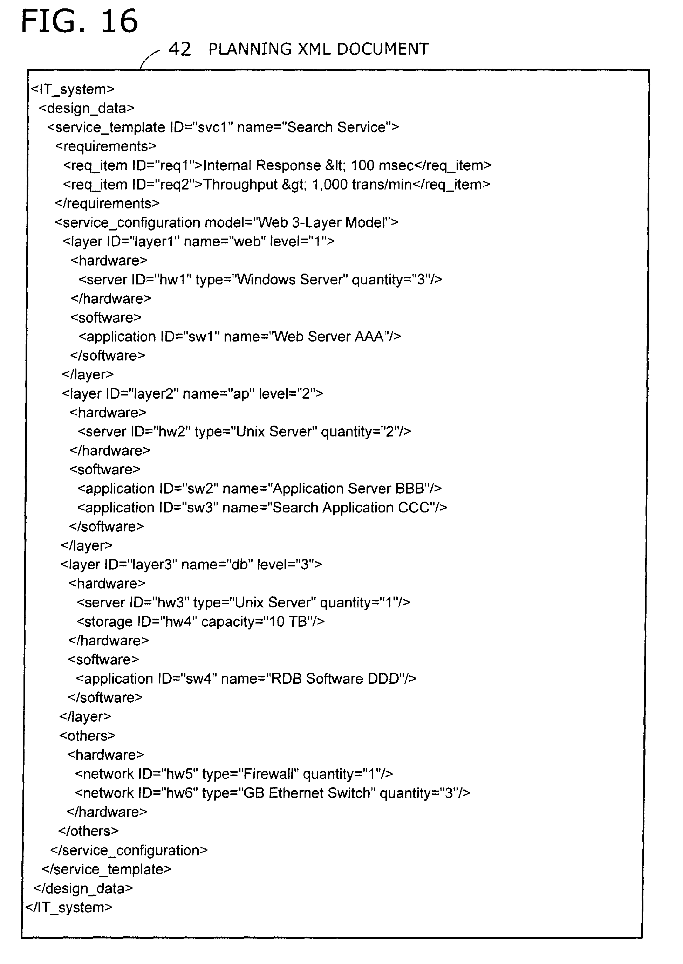

FIG. 16 shows an example of a planning XML document. This planning XML document 42 is different from the quotation data 41 of FIG. 15 in that the former lacks customer information and cost data. The planning XML document 42, on the other hand, contains service details and hardware and software configuration data since subsequent phases requires them.

A system is designed based on the above planning XML document 42 under the control of the system design manager 221. Assume, for example, that there is a flaw in the quotation. Specifically think of a case where the WEB layer has fewer servers than actually required. In this case, the system design manager 221 returns a problem report to the planning manager 121 to indicate this specific problem (i.e., "more server needed"). The problem report includes the number of servers that have to be added and an ID "hw1" appearing in the planning XML document 42. If the planning XML document 42 has no problem, the system design manager 221 creates design data 43.

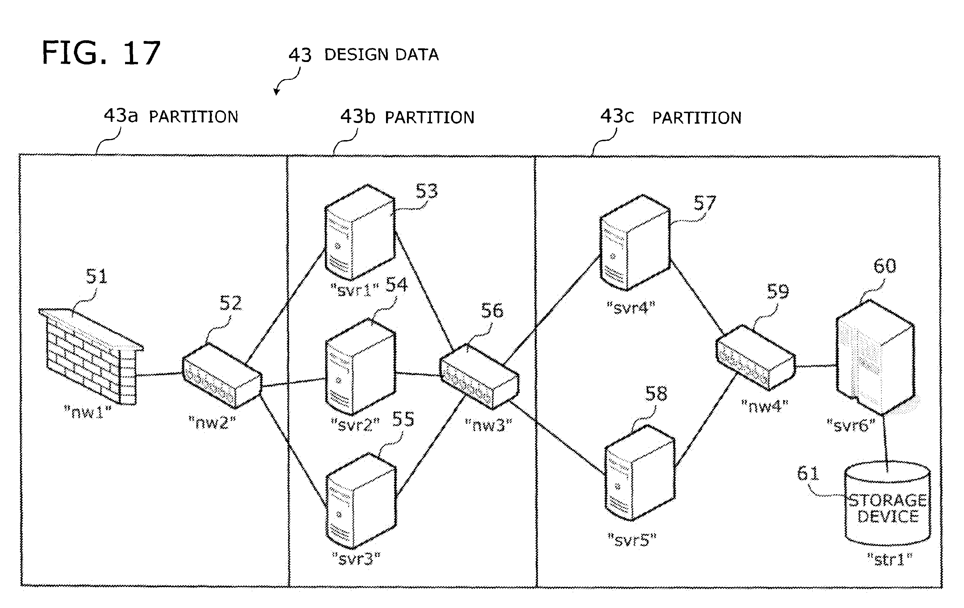

FIG. 17 depicts an example of design data. This design data 43 is based on the hardware information obtained from the planning XML document 42 and gives specific definitions about connection and location of devices. For example, the location information describes to which partition each device should belong.

The example shows that the system is divided into a plurality of partitions 43a, 43b, and 43c.

The first partition 43a accommodates a firewall 51 and a switch 52, which are identified by their IDs "nw1" and "nw2," respectively. The switch 52 is a Gigabyte Ethernet (registered trademark) switch.

The second partition 43b accommodates three servers 53 to 55 and a switch 56. The servers 53, 54, and 55 are identified by their respective IDs "svr1," "svr2," and "svr3." The switch 56 is a Gigabyte Ethernet switch with an ID of "nw3."

The partition 43c accommodates three servers 57, 58, and 60, a switch 59, and a storage device 61. The servers 57, 58, and 60 are identified by their respective IDs "svr4," "svr5," and "svr6." The switch 59 is a Gigabyte Ethernet switch with an ID of "nw4." The storage device 61 is identified by its ID "str1."

Subsequent phases do not use the location information contained in the design data 43. For this reason, the representative dataset extractor 224 excludes the location information when it extracts a representative dataset from the design data 43. Then the relationship descriptor generator 225 produces relationship descriptors by comparing this minimized representative dataset of design phase with the planning XML document 42 received from planning phase. Subsequently the data combiner/sender 226 produces a design XML document 44 by incorporating the produced representative dataset and relationship descriptors into the planning XML document 42.

While it is not shown in FIG. 17, the design data 43 includes a piece of information indicating which data item of the planning XML document 42 of FIG. 16 was referenced in setting each specific device. For example, the design data 43 contains some information indicating that the servers 53 to 55 have been set with reference to a "server" element with an ID of "hw1."

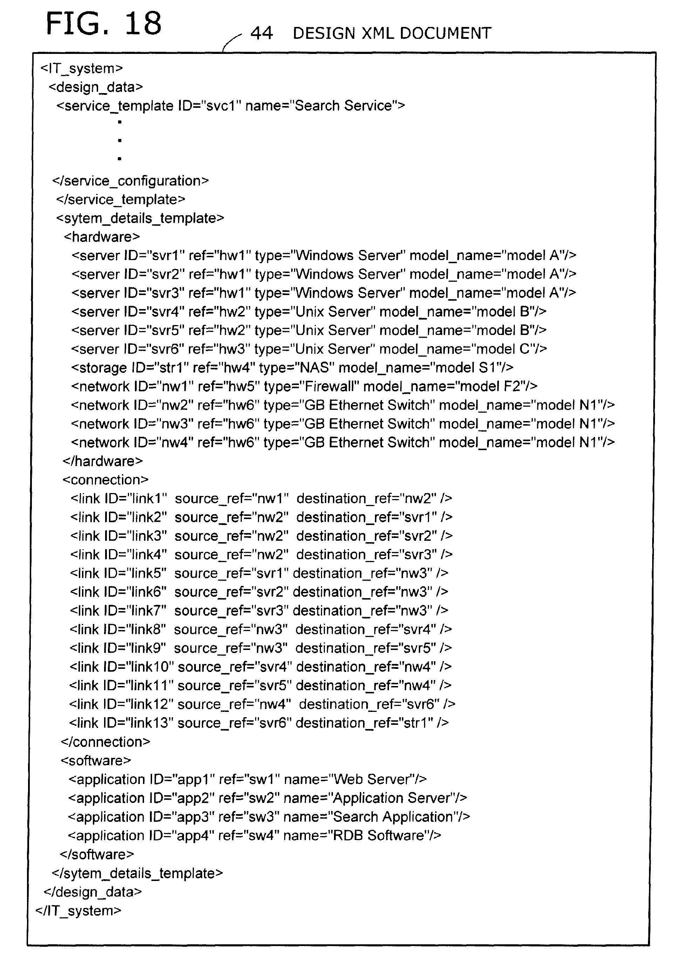

FIG. 18 shows an example of a design XML document. The design XML document 44 has a new section enclosed by sytem_details_template tags, in addition to the lines supplied from the previous phase. FIG. 18 only shows this new section. The omitted sections are equivalent to the planning XML document 42 shown in FIG. 16.

The illustrated design XML document 44 contains minimum information about each device and connection information. The data describing each individual hardware and software component has been added a "ref" (reference) attribute to show which element in the quotation corresponds to the component in question. This "ref" attribute serves as a relation descriptor, which indicates which part of preceding representative datasets was referenced. See the line that reads <server ID="svr1" ref="hw1" type="Windows Server" model_name="model A" />, for example. This line shows that a server with an ID of "svr1" has been added to the system design, based on a server element with an ID of "hw1" defined in the planning XML document 42. Even in the case where a potential problem in planning phase reveals itself in design or later phase, the ref attribute makes it easy to trace the problem back to its origin in the quotation.

The design XML document 44 is now passed to implementation phase, where the system is put into implementation under the management of the system implementation manager 321. Here, the system implementation engineer may encounter a problem of insufficient device performance. If this is the case, then he/she tries to locate the problem in the following way.

Suppose, for example, that servers 57 and 58 fail to provide the required throughput. To address this problem, it is necessary to place an additional server in parallel with the existing servers 57 and 58. Looking into the design XML document 44, particularly the section enclosed by sytem_details_template tags, the implementation engineer finds the fact that both servers 57 and 58 with IDs "svr4" and "svr5" refer to "hw2."

Referring then to the section enclosed by "service_configuration" tags (which is equivalent to what is shown in FIG. 16 although FIG. 18 omits it) in the same design XML document 44, there is a subsection describing server hardware with an ID of "hw2." The hardware description reads: type="UNIX Server" quantity="2", which suggests that the problem derives from an erroneous decision in planning phase that assigned only two Unix servers as application servers.

The system implementation engineer then commands the system implementation manager 321 to send a problem report notifying the planning manager 121 of the fact that the application servers need more processing power than the existing two UNIX servers. Accordingly the sales engineer produces a revised quotation by using the planning manager 121.

In implementation phase, the implementation engineer implements and sets up a system according to design data provided in the design XML document 44 unless there is a problem in that data. Then, by using the system implementation manager 321, the implementation engineer produces real system data 45 representing the resultant system.

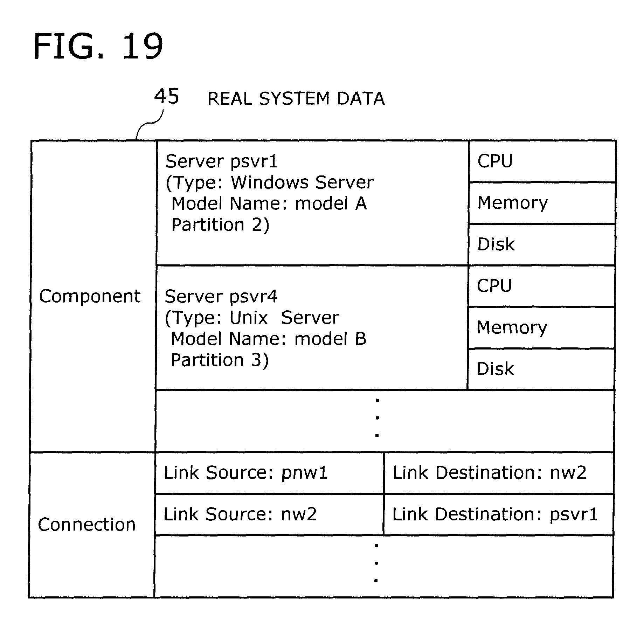

FIG. 19 shows an example of real system data. This real system data 45 is a collection of detailed information about the implemented system. Specifically, the real system data 45 describes what components constitute the system and how the software programs are reconfigured, in addition to including device information that has been manipulated up to design phase. While it is not depicted in FIG. 19, the real system data 45 further describes which representative dataset in the design XML document 44 was used to define each component of the system. For example, the real system data 45 includes a piece of information indicating that a server "psvr1" has been defined with reference to a server element with an ID of "svr1."

Some of the components can be uniquely identified by their model numbers alone. Regarding such components, there is no need to provide subsequent phases with detailed component information. For this reason, the schema 30 omits model number and component information of each device from the group of data items that should be passed to subsequent phases. Accordingly, the representative dataset extractor 324 excludes detailed component information when compiling a representative dataset. The relationship descriptor generator 325 then produces relationship descriptors describing how the data items of the design XML document 44 are related with those of the implementation-phase representative dataset. The data combiner/sender 326 produces an implementation XML document 46 accordingly.

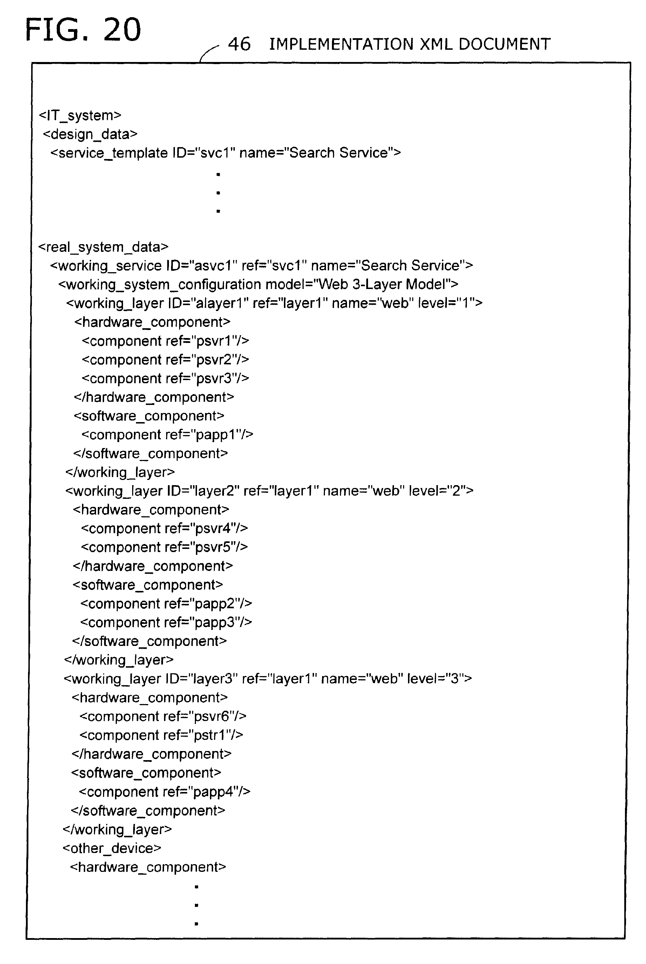

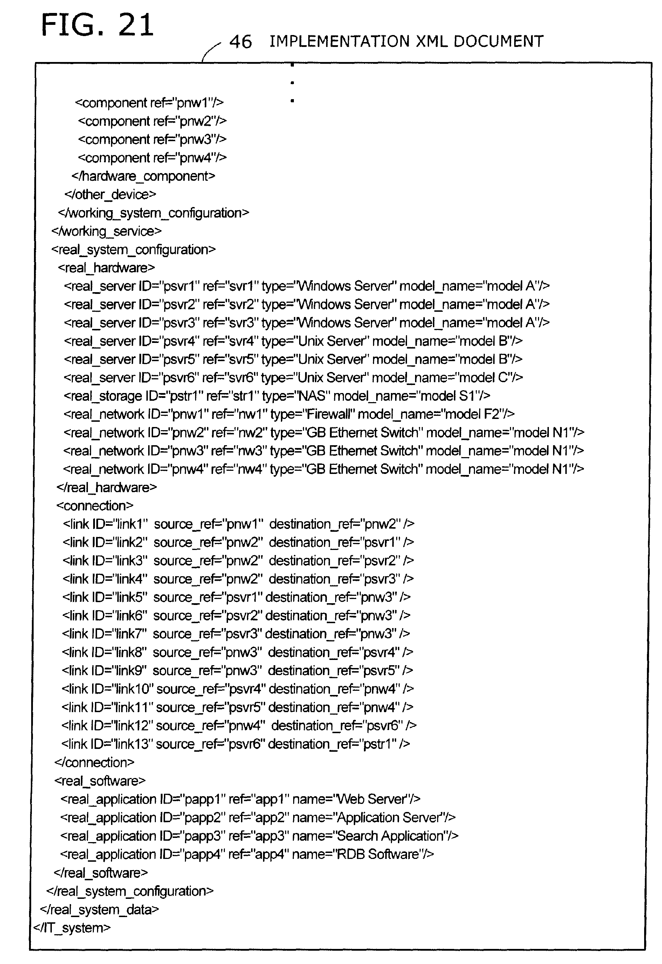

FIGS. 20 and 21 are first and second diagrams showing an example of an implementation XML document. Specifically, FIGS. 20 and 21 show the first and second halves of an implementation XML document 46. Note that these diagrams only show newly added sections. The omitted sections are equivalent to the design XML document 44 shown in FIG. 18.

As FIG. 20 shows, the implementation XML document 46 contains, in addition to what the design XML document 44 offers, a new section starting with a real_system_data tag. This real_system_data section enumerates actual hardware and software components constituting a system, as well as describing how those components are combined to provide intended services.

The new section also adds a "ref" attribute to each hardware and software component, as well as to each working service, to indicate which part of the design data corresponds to those components or services. See the line that reads <real_server ID="psvr1" ref="svr1" type="Windows Server" model_name ="model A"/>, for example. This indicates that the implementation phase has defined a real server with an ID of "psvr1" with reference to the design-phase definition for servers identified by "svr1."

As can be seen from the above example, an implementation XML document contains design data and real system data in separate sections, thus making it easier to test whether the implementation complies with the design diagram. It also allows the same design data to be reused when rebuilding a service that is failed for some reason, or when deploying multiple instances of a service.

In operation phase, which is the last of four phases, the operation manager 421 operates and monitors the system by using the implementation XML document 46 received from implementation phase. The operation manager 421 continues to operate the system as long as there are no problems. When the system exhibits a problem, the operation manager 421 determines whether it is possible to solve the problem within the operation phase. If it is, the operation manager 421 restarts operation after the problem is solved. If it is not, the operation engineer finds a relevant phase by consulting the implementation XML document 46. Then, using the operation manager 421, the operation engineer requests a managing entity of the suspected phase to solve the problem.

The above-described mechanism offers seamless interface between a series of resource management systems. According to the first embodiment of the invention, one phase produces an XML document for downstream phase by adding new information to an XML document received from upstream phase. Some part of the upstream information may be removed from the produced XML document when it is apparent that the subsequent phases do not need that information.

### Second Embodiment

This section will describe a second embodiment of the invention. In a hierarchical resource management system, the second embodiment offers hierarchical data coordination within operation phase right after implementation phase. That is, a plurality of management systems are employed to manage a single phase in a hierarchical fashion, whereas the first embodiment offers one management system for each of the four phases.

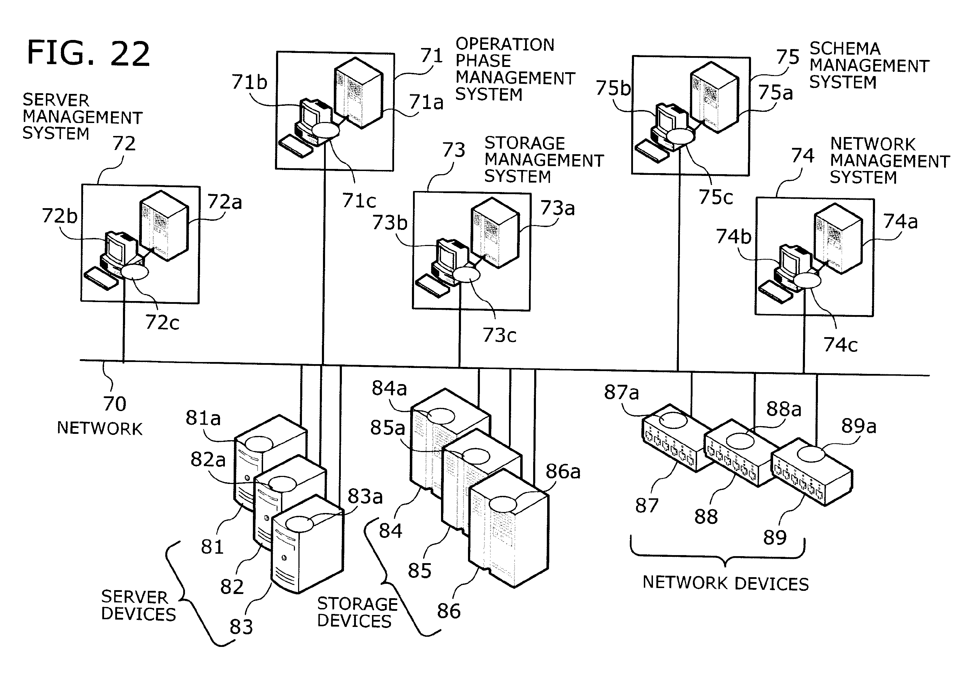

FIG. 22 shows a system configuration of the second embodiment, which corresponds to the operation phase management system of FIG. 3. While not shown in FIG. 22, the illustrated management system is connected to a planning phase management system, a design phase management system, and an implementation phase management system via a network.

In this operation phase, an operation phase management system 71, server management system 72, storage management system 73, network management system 74, and schema management system 75 work in concert with each other to manage the operation of server devices 81 to 83, storage devices 84 to 86, and network devices 87 to 89 connected via a network 70.

Specifically, the server management system 72 manages server devices 81 to 83 with its storage device 72a and server device 72b. The storage management system 73 manages storage devices 84 to 86 with its storage device 73a and server device 73b. The network management system 74 manages network devices 87 to 89 with its storage device 74a and server device 74b. The operation phase management system 71 is formed from a storage device 71a and a server device 71b. The operation phase management system 71 collects information from the server management system 72, storage management system 73, and network management system 74 to manage the entire system. The schema management system 75 has a storage device 75a and a server device 75b to manage schemas for use in other management systems.

The server devices 71b, 72b, 73b, 74b, and 75b employed in the above management systems are ordinary computer systems configured to provide specific management functions. More specifically, the server device 71b in the operation phase management system 71 includes an operation manager 71c. The server device 72b in the server management system 72 includes a server manager 72c. Likewise, the server device 73b in the storage management system 73 includes a storage manager 73c, and the server device 74b in the network management system 74 includes a network manager 74c. The server device 75b in the schema management system 75 includes a schema manager 75c.

Each management system offers functions corresponding to those shown in FIG. 5, i.e., the data manager 122, data receiver 123, representative dataset extractor 124, relationship descriptor generator 125, and data combiner/sender 126.

Agents 81a, 82a, and 83a are running on the managed server devices 81 to 83, respectively, to send information on their own operation condition to the server management system 72. Likewise, agents 84a, 85a, and 86a are running on the managed storage devices 84 to 86, respectively, to send information on their operation condition to the storage management system 73. Agents 87a, 88a, and 89a are running on the managed network devices 87 to 89, respectively, to send information on their operation condition to the network management system 74.

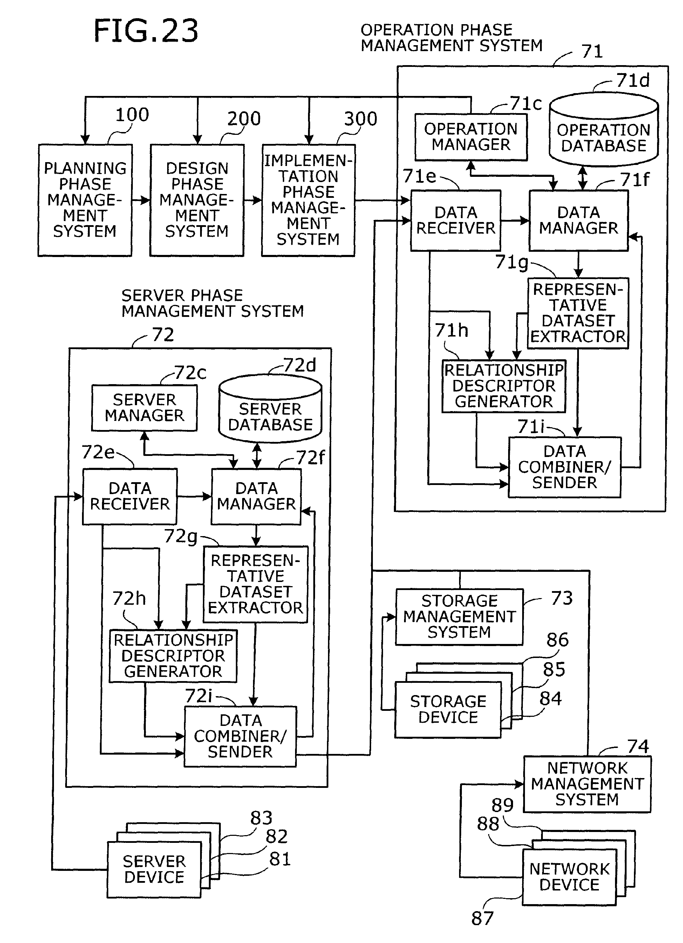

FIG. 23 is a functional block diagram of the second embodiment. This block diagram shows details of the server management system 72, whereas other low-level management systems are simplified. The same detailed structure applies to the storage management system 73 and network management system 74.

As can be seen from FIG. 23, the operation phase management system 71 is formed from an operation manager 71c, an operation database 71d, a data receiver 71e, a data manager 71f, a representative dataset extractor 71g, a relationship descriptor generator 71h, and a data combiner/sender 71i. These elements offer the same functions as their counterparts in the operation phase management system 400 of FIG. 5, except for the operation manager 71c and data receiver 71e.

Besides providing the same functions as the operation manager 421 in the operation phase management system 400 of FIG. 5, the operation manager 71c manages system operations based on information collected from lower-level management systems in the hierarchy. Besides providing the same functions as the data receiver 423 in the operation phase management system 400 of FIG. 5, the data receiver 71e receives various pieces of information from lower-level management systems and passes them to the operation manager 71c via the data manager 71f.

The server management system 72 is formed from a server manager 72c, a server database 72d, a data receiver 72e, a data manager 72f, a representative dataset extractor 72g, a relationship descriptor generator 72h, and a data combiner/sender 72i. These elements offer the same functions as their counterparts in the operation phase management system 71, except for the server manager 72c, data receiver 72e, and data combiner/sender 72i.

The server manager 72c provides functions for managing server operations based on various information indicating operating status of managed server device 81 to 83. The data receiver 72e receives from managed server devices 81 to 83 various information indicating their operating status. The data combiner/sender 72i is similar to the data combiner/sender 71i in the operation phase management system 71, except for the destination of representative datasets. That is, it sends an XML document to the operation phase management system 71 positioned in an upper level of the hierarchy.

According to the above-described mechanism, low-level management systems (i.e., server management system 72, storage management system 73, and network management system 74) collect information in XML form from devices that they are managing. Each low-level management system takes care of two or more managed devices and receives information from each of those devices. The information collected from those managed devices is stored in a database that each management system owns.

The server management system 72, storage management system 73, and network management system 74 search the information that they have collected, so as to extract data items required by the operation phase management system 71 in the upper level. Then they produces an XML document for used by the operation phase management system 71. In addition to the extracted data items, this XML document includes information about relationships between managed devices, together with other information.

In the case where the operation phase management system 71 has a next phase to communicate with, the operation phase management system 71 produces a representative dataset and relationship descriptors from XML documents received from its subordinate management systems and previous-phase management system and then sends them to the next phase.

While FIGS. 22 and 23 illustrate only three low-level management systems, there is no particular limitation in the number of low-level management systems. The hierarchy of management systems is not limited to the illustrated example, but may have three or more layers.

The following section will describe what information is sent from each managed device to its corresponding management system.

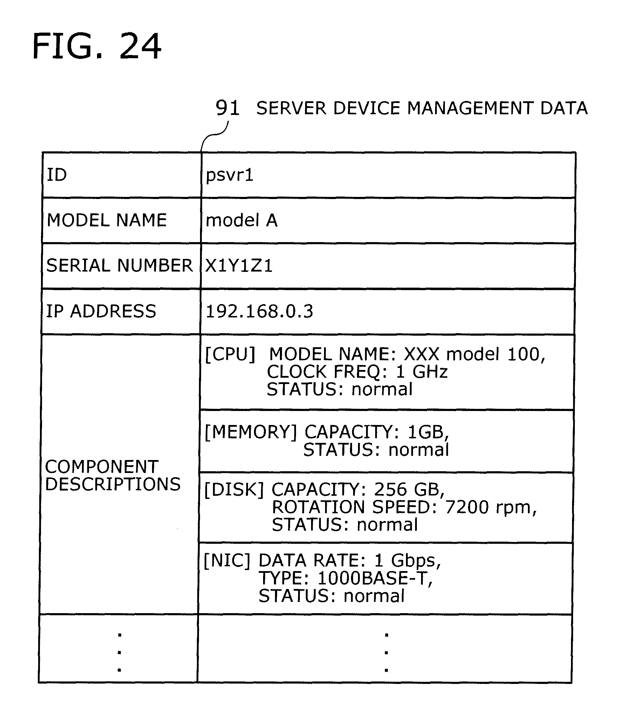

FIG. 24 shows an example of server device management data. Managed server devices 81 to 83 send such server device management data 91 to the server management system 72, which includes ID, model name, serial number, IP address, and component descriptions of a sending server device.

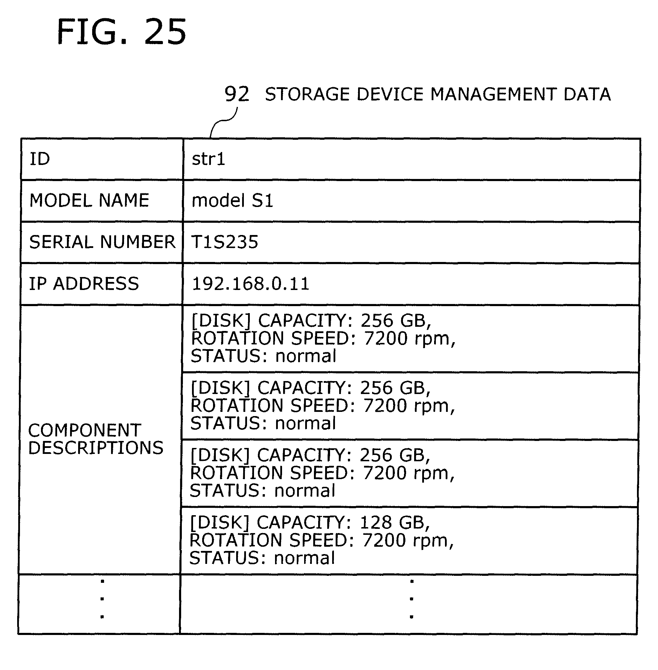

FIG. 25 shows an example of storage device management data. Managed storage devices 84 to 86 send such storage device management data 92 to the storage management system 73, which includes ID, model name, serial number, IP address, and component descriptions of a sending storage device.

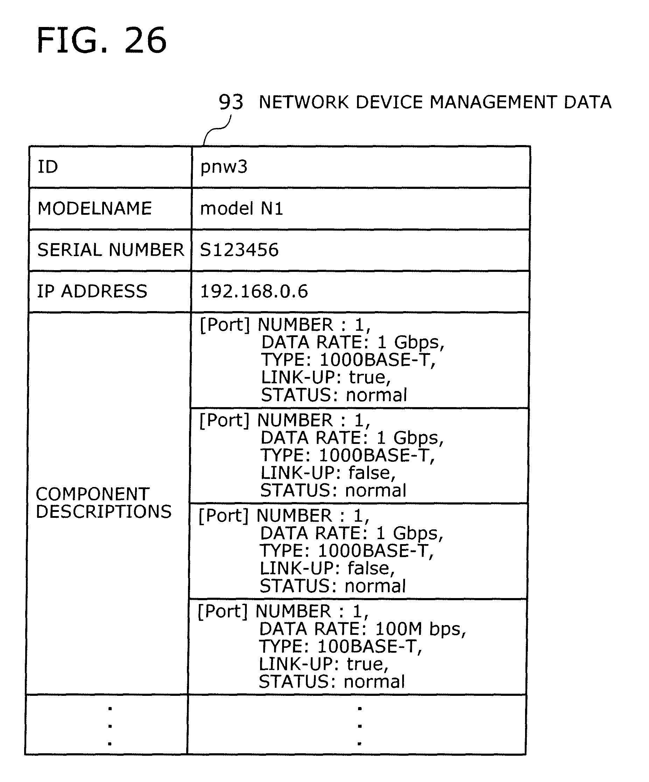

FIG. 26 shows an example of network device management data. Managed network device 87 to 89 send such network device management data 93 to the network management system 74, which includes ID, model name, serial number, IP address, component descriptions of a sending network device.

The server management system 72, storage management system 73 and network management system 74 receive management data from their respective managed devices. They save the received management data in their own databases, at which time a subset of this data is sent up to the operation manager 71c of the operation phase management system 71. This subset, or a representative dataset, contains minimum sufficient information for operation management purposes.

More specifically, the server management system 72 sends the operation phase management system 71 a server management XML document containing a representative dataset. The storage management system 73 sends the operation phase management system 71 a storage management XML document containing a representative dataset. The network management system 74 sends the operation phase management system 71 a network management XML document containing a representative dataset.

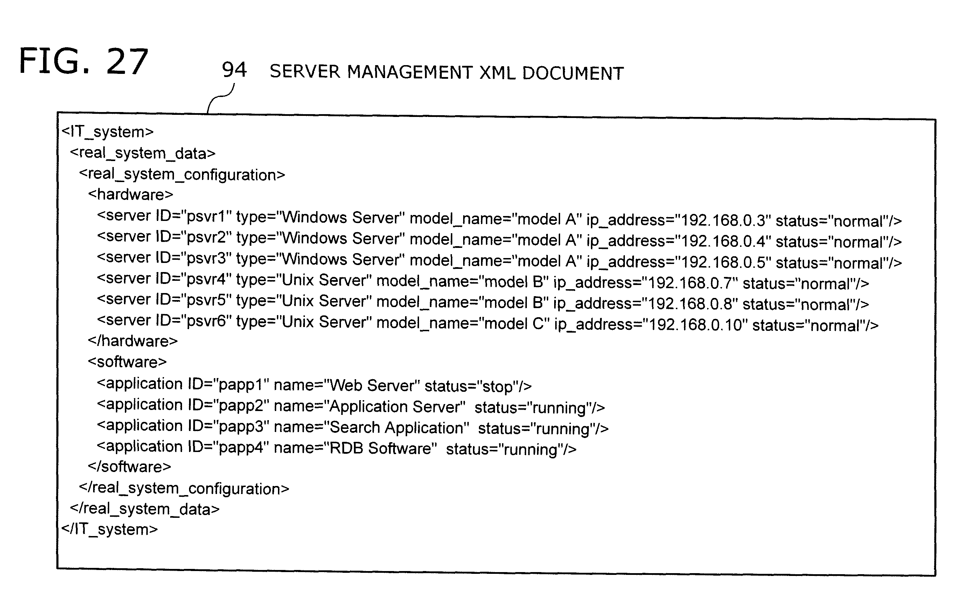

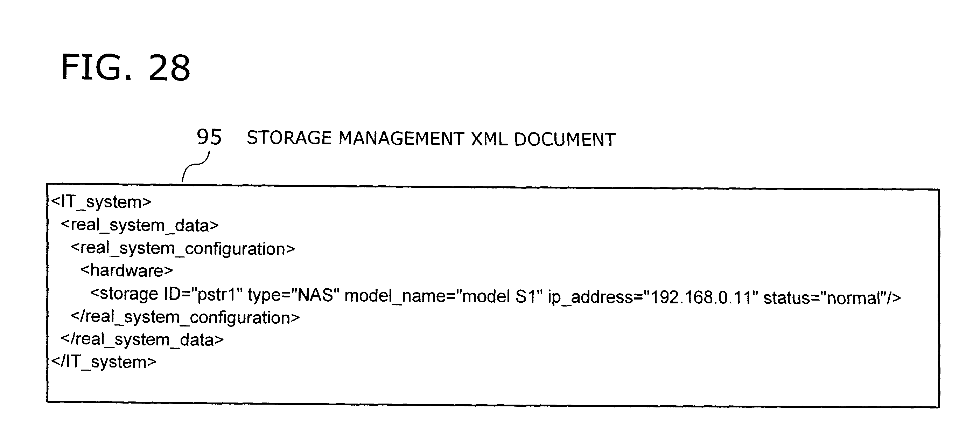

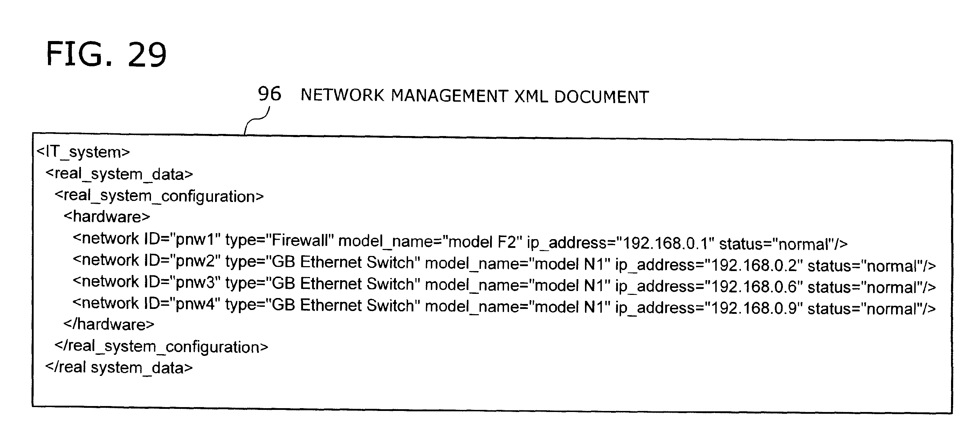

FIG. 27 shows an example of a server management XML document. FIG. 28 shows an example of a storage management XML document. FIG. 29 shows an example of a network management XML document.

The operation manager 71c in the operation phase management system 71 operates the entire system, consulting a dataset received from the preceding phase (i.e., implementation phase), in addition to the documents shown in FIGS. 27 to 29. The operation manager 71c also supplies the next phase with a resource management XML document after removing unnecessary information.

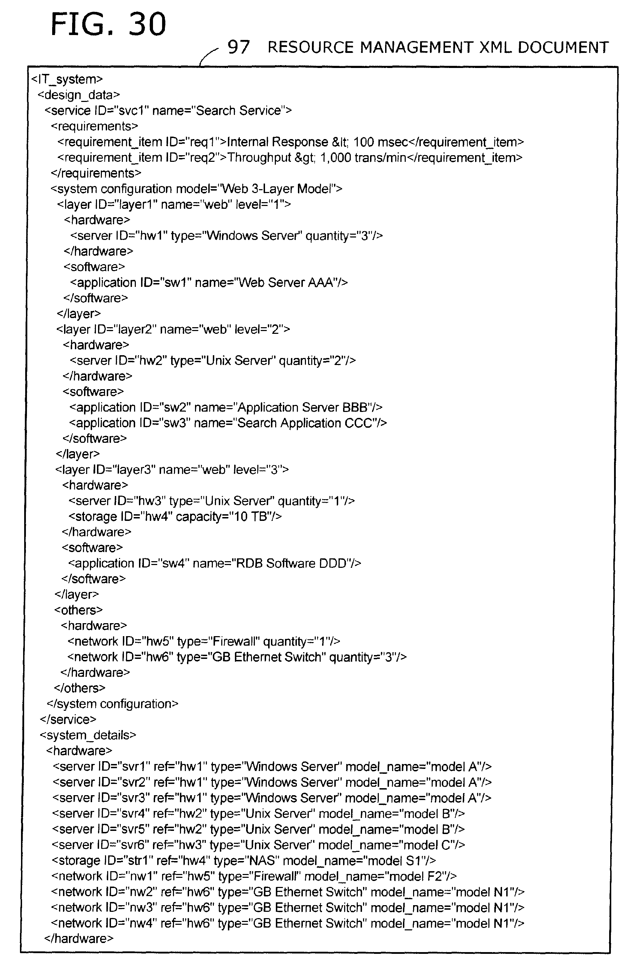

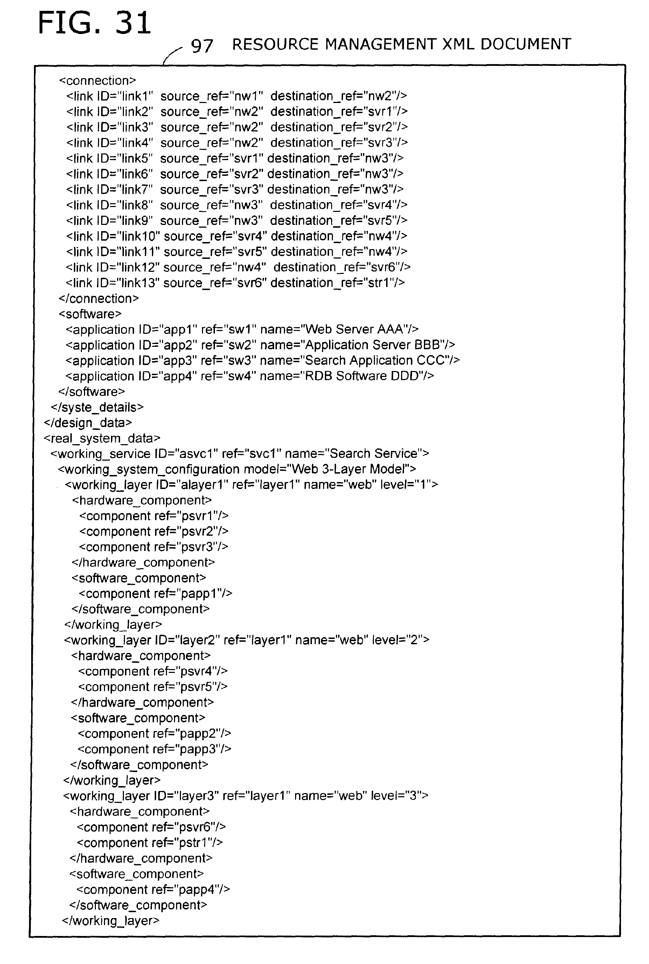

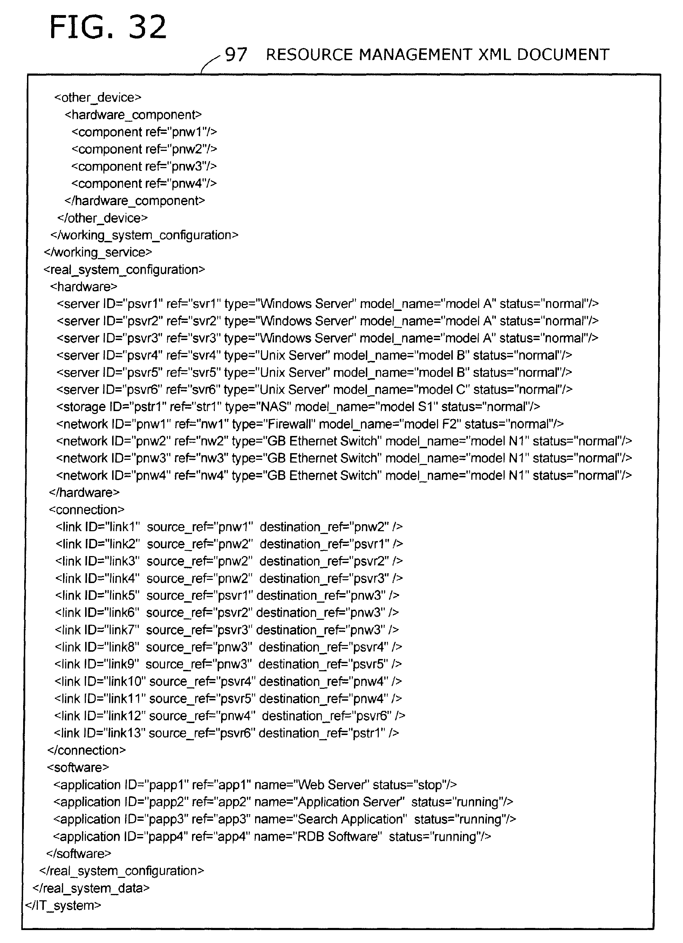

FIGS. 30 to 32 are first to third diagrams showing an example of a resource management XML document. Carrying the contents shown in FIGS. 30 to 32, this resource management XML document 97 is sent from the operation phase management system 71 to its succeeding phase (e.g., a remote surveillance system that manages the system from a remote location).

The following section will now describe how the management systems serving different phases work together to deal with a trouble. Specifically, suppose that an IT system has been implemented according to the XML document shown in FIGS. 30 to 32 to provide a search service. The problem is that the system can process no more than 800 search requests per minute. This performance problem is reported from operation phase to design phase.

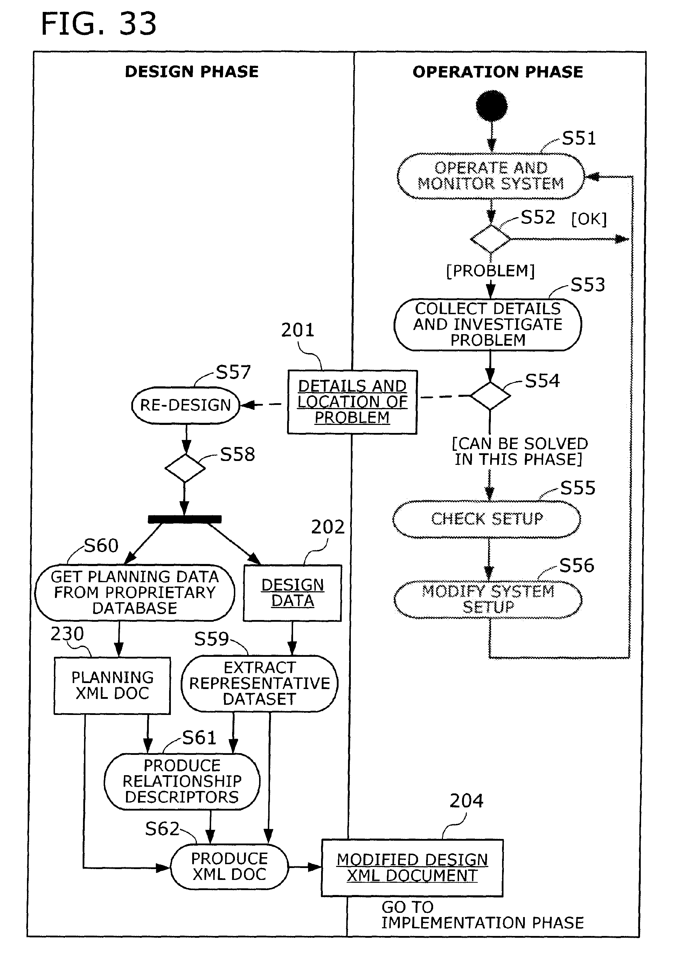

FIG. 33 is a flowchart showing how a feedback from operation phase is handled. The process of FIG. 33 proceeds according to the steps described below, where the reference numerals shown in FIG. 5 are used again since the design phase management system 200 shown in FIG. 5 takes charge of design phase processing.

It is assumed here that an implementation XML document provided from implementation phase to operation phase specifies that the performance of search service be at least 1,000 transactions per minute. The operation phase management system 71 knows this as one of the service requirements.

(Step S51) The operation phase management system 71 monitors operating status of the service, in concert with the server management system 72, storage management system 73, and network management system 74.

(Step S52) During the monitoring, the operation phase management system 71 determines whether there is a problem with the service. The operation phase management system 71 continues monitoring the system as long as there are no problems.

(Step S53) Now that the monitoring results indicate unsatisfactory service performance, the operation phase management system 71 first attempts to collect more detailed information about relevant part. "Relevant part" in this context refers to the entire IT system providing search service.

Specifically, the server management system 72 checks the workload of each server device 81 to 83 assigned for the working IT system and reports the result to the operation phase management system 71. The storage management system 73 checks the workload of each storage device 84 to 86 assigned for the working IT system and reports the result to the operation phase management system 71. Likewise, the network management system 74 checks the workload of each network device 87 to 89 assigned for the working IT system and reports the result to the operation phase management system 71.

The operation phase management system 71 then investigates the source of the problem. Alternatively, a human operator may perform this task by consulting monitor views provided by the management systems. The following description assumes that the investigation is carried out by the management system itself.

Some problems may be handled by operation phase while others have to be passed back to design phase. In other words, problems are solved in the following two cases:

### - First Case

Suppose that the problem derives from a wrong setup during the course of implementing the system. In this case, the engineer in charge of operation and management traces back the past modifications to the system configuration in an attempt to identify the source of the problem. For example, a bottle neck is observed in a web server "psvr1" to which an excessive number of requests are directed, relative to those assigned to other web servers "psvr2" and "psvr3." This kind of load imbalance between servers may be produced by a failure in some hardware or software components, or by a wrong setup.

The operation management engineer further looks into hardware and software status and detailed parameters and error information. This allows him/her to logically determine whether the problem lies in hardware or software or setup. For example, the operation management engineer determines, from the information collected from management systems, that the problem derives from a design flaw. He/she may be able to confirm his/her solution to the problem by performing a simulation with a corrected setup, so that the service will be provided in the intended way.

### - Second Case

In the case where every server "psvr1," "psvr2," and "psvr3" stays at a high load level while the incoming requests appear to be distributed evenly, the problem stems from the lack of absolute processing performance of those servers. Generally speaking, evaluation of a system dictates careful consideration of correlation between performance and load indicators, along with log information. It is, however, still possible to let the management system detect a performance problem autonomously. In the present case, it is necessary to go back to design phase and review the system design.

(Step S54) As a result of the above investigation, it is determined whether the problem can be solved within the operation phase or should be passed to some preceding phase. In the former case (i.e., first case), the process advances to step S55. In the latter case (i.e., second case), a problem report 201 is sent to a relevant phase to describe the details and location of the problem.

(Step S55) In the first case, the operation management engineer checks detailed setups by using functions of the operation manager 71c.

(Step S56) After modifying a system setup by using the operation manager 71c, the operation management engineer goes back to step S51 to resume the suspended service.

(Step S57) In the second case, the problem has to be handled in design phase. Specifically, the operation phase management system 71 consults an XML document received from implementation phase so as to determine to which design data element the three servers correspond. This reveals the fact that there is a problem with the definition of servers "svr1," "svr2," and "svr3" in the design data. Accordingly, the operation manager 71c in operation phase sends a problem report 201 to the system design manager 221 in design phase. This report describes the incident as: "Service requirement 'req2' is not satisfied. Current throughput is only 800 transaction/min whereas web servers 'svr1,' 'svr2,' and 'svr3' are running with a full load."

Since all the IDs "req2," "svr1," "svr2," and "svr3" in this report are defined in design phase, it is easy for the system design engineer to locate a design problem by using the system design manager 221. Upon receipt of the above report, the system design engineer begins re-design of the system in design phase, such that the required throughput is achieved with more powerful servers.

(Step S58) Design phase invokes steps S59 and S60 as a parallel process.

(Step S59) The data manager 222 supplies the representative dataset extractor 224 with design data 202 as an outcome of the re-design. In response, the representative dataset extractor 224 extracts a representative dataset with reference to a schema in the schema management system 75.

(Step S60) The data manager 222 retrieves a relevant planning XML document 230 from the design database 211 and provides it to the relationship descriptor generator 225.

(Step S61) The relationship descriptor generator 225 produces relationship descriptors describing how the planning XML document is related with representative datasets.

(Step S62) The data combiner/sender 226 appends the produced relationship descriptors and representative dataset to the planning XML document 230, thus producing a modified design XML document 204. The data combiner/sender 226 passes this modified design XML document 204 to the next implementation phase.

In implementation phase, the existing servers are replaced with new servers. Lastly, the operation phase restarts the service. The new system design is supplied as an XML document to subsequent phases either in full form or in differential form with respect to the previous version of the design XML document.

The foregoing first and second embodiments enable one phase to send a minimum sufficient set of information to subsequent phases or to upper-level resource management systems in the same phase. The resulting reduction of transmitted data alleviates the workload of internal processing and communication processing. The amount of interface datasets may further be reduced by restricting relationship descriptors to those between extracted representative datasets.

The use of XML as a data exchange format makes it easier to perform schema-based validation of documents. XML documents are friendly to both humans and machines. For this reason, the elements of proposed management systems can work together efficiently, no matter whether they are manual operations or automated processing.

Each phase appends new XML data to an existing document, while excluding detailed information not required in normal situations. Relationship descriptors describe the relationships between those XML data, allowing one to request detailed information in other management system by specifying a keyword appearing in an XML document in the case of failure or other urgent situations. The same mechanism can be used to facilitate reworking in an upstream phase by feeding back key information and other additional information.

As can be seen from the above description, the present invention provides seamless data interface between life-cycle phases, as well as between resource management systems within a phase. This feature improves efficiency of IT system management, reduces the turnaround time for implementation and provision of services, and quickly resolves problems. As a result, the present invention contributes to reduced management costs and enhanced stability of services. The present invention uses unified data items and management methods to facilitate validation of data exchanged between phases, thus making it easier to automate resource management and implement autonomous operation based on the system's own decisions.

The above-described management systems forward information in the form of XML documents from upstream to downstream, while allowing feedback of information for autonomous handling of problems. In actual operation, however, the system may notify the administrator before changing configuration or sending information from one phase to another phase.

The above-described processing functions of the present invention are actually implemented on a computer system. Each specific function of the proposed service management apparatus, phase management systems, and schema management system is coded with instructions and made available in the form of computer programs. A computer system executes such programs to provide the foregoing processing functions. Those programs may be stored in a computer-readable storage medium. Suitable computer-readable storage media include magnetic storage devices, optical discs, magneto-optical storage media, and semiconductor memory devices, for example. Magnetic storage devices include hard disk drives (HDD), flexible disks (FD), and magnetic tapes, for example. Optical disc media include digital versatile discs (DVD), DVD-RAM, compact disc read-only memory (CD-ROM), CD-Recordable (CD-R), and CD-Rewritable (CD-RW). Magneto-optical storage media include magneto-optical discs (MO), for example.

Portable storage media, such as DVD and CD-ROM, are suitable for distribution of program products. Network-based distribution of software programs may also be possible, in which case the program files are made available on a server computer for downloading to other computers via a network.

A computer stores programs in its local storage unit, which have previously been installed from a portable storage media or downloaded from a server computer. The computer executes those programs read out of the local storage unit, thereby performing the programmed functions. As an alternative way of program execution, the computer may execute programs, reading out program codes directly from a portable storage medium. Another alternative method is that the user computer dynamically downloads programs from a server computer when they are demanded and executes them upon delivery.

The present invention is not limited to the foregoing embodiments. Rather, various modification may be made to those embodiments within the scope of the present invention.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

### Description of Reference Numerals

1: schema storage means
1a, 1b, 1c, 1d: schema
2, 3: service management apparatus
2a, 3a: phase-specific service management means
2b, 3b: data receiving means
2c, 3c: data management means
2d, 3d: data storage means
2e, 3e: representative dataset extracting means
2f, 3f: relationship descriptor generating means
2g, 3g: data combining means
4, 5, 6: interface dataset

## Claims

1. A service management program for managing services in multiple phases that proceed in a predetermined order, the service management program causing a computer to function as:
schema storage means for storing a schema that specifies which of data items determined in a phase should be passed as a representative dataset to subsequent phases;
phase-specific service management means, assigned to one of the phases, for receiving an interface dataset that includes representative datasets and relationship descriptors of preceding phases, and providing a service of the assigned phase in response to user inputs by using the representative datasets included in the received interface dataset to produce a phase dataset that includes data items determined in the assigned phase and records indicating which data was used to determine the data items;
representative dataset extracting means for extracting a new representative dataset from the phase dataset produced by the phase-specific service management means, the new representative dataset being a collection of extracted data items that correspond to the data items specified in the schema;
relationship descriptor generating means for producing relationship descriptors describing usage relationships between the new representative dataset extracted by the representative dataset extracting means and the representative datasets included in the interface dataset used to produce the new representative dataset, with reference to the phase dataset produced by the phase-specific service management means; and
data combining means for modifying the interface dataset received by the phase-specific service management means, by appending thereto the new representative dataset extracted by the representative dataset extracting means and the relationship descriptors produced by the relationship descriptor generating means, and passing the modified interface dataset to the phase-specific service management means of a subsequent phase.

2. The service management program according to claim 1, wherein:
the schema stored in the schema storage means defines a data structure used to send data to a subsequent phase; and
the data combining means consults the schema of the phase to which the phase-specific service management means is assigned to ensure that the interface dataset will comply with the data structure defined in the schema.

3. The service management program according to claim 1, further causing the computer to function as data receiving means for receiving the interface dataset from another computer serving in a preceding phase,
wherein the data combining means sends the modified interface dataset to yet another computer serving in a subsequent phase.

4. The service management program according to claim 1, wherein:
the phases of services are organized in a serial order; and
the phase-specific service management means receives the interface dataset from the phase immediately preceding the assigned phase.

5. The service management program according to claim 1, wherein:
one of the phases is organized in a hierarchical structure of entities, wherein the service in that phase begins at a bottommost entity of the hierarchical structure; and
the phase-specific service management means receives the interface dataset from the entity that is positioned immediately below the phase-specific service management means.

6. An apparatus for managing services in multiple phases that proceed in a predetermined order, the apparatus comprising:
schema storage means for storing a schema that specifies which of data items determined in a phase should be passed as a representative dataset to subsequent phases;
phase-specific service management means, assigned to one of the phases, for receiving an interface dataset that includes representative datasets and relationship descriptors of preceding phases, and providing a service of the assigned phase in response to user inputs by using the representative datasets included in the received interface dataset to produce a phase dataset that includes data items determined in the assigned phase and records indicating which data was used to determine the data items;
representative dataset extracting means for extracting a new representative dataset from the phase dataset produced by the phase-specific service management means, the new representative dataset being a collection of extracted data items that correspond to the data items specified in the schema;
relationship descriptor generating means for producing relationship descriptors describing usage relationships between the new representative dataset extracted by the representative dataset extracting means and the representative datasets included in the interface dataset used to produce the new representative dataset, with reference to the phase dataset produced by the phase-specific service management means; and
data combining means for modifying the interface dataset received by the phase-specific service management means, by appending thereto the new representative dataset extracted by the representative dataset extracting means and the relationship descriptors produced by the relationship descriptor generating means, and passing the modified interface dataset to the phase-specific service management means of a subsequent phase.

7. A method for managing services in multiple phases that proceed in a predetermined order, the method comprising:
storing a schema in a schema storage means, the schema specifying which of data items determined in a phase should be passed as a representative dataset to subsequent phases;
with a phase-specific service management means assigned to one of the phases, receiving an interface dataset that includes representative datasets and relationship descriptors of preceding phases, and providing a service of the assigned phase in response to user inputs by using the representative datasets included in the received interface dataset to produce a phase dataset that includes data items determined in the assigned phase and records indicating which data was used to determine the data items;
with a representative dataset extracting means, extracting a new representative dataset from the phase dataset produced by the phase-specific service management means, the new representative dataset being a collection of extracted data items that correspond to the data items specified in the schema;
with a relationship descriptor generating means, producing relationship descriptors describing usage relationships between the new representative dataset extracted by the representative dataset extracting means and the representative datasets included in the interface dataset used to produce the new representative dataset, with reference to the phase dataset produced by the phase-specific service management means; and
with a data combining means, modifying the interface dataset received by the phase-specific service management means, by appending thereto the new representative dataset extracted by the representative dataset extracting means and the relationship descriptors produced by the relationship descriptor generating means, and passing the modified interface dataset to the phase-specific service management means of a subsequent phase.
